# EUROPEAN PATENT APPLICATION

(11) **EP 4 557 816 A2**
(43) Date of publication of application: **21.05.2025**
(21) Application number: 24206463.2
(22) Date of filing: 14.10.2024
(51) Int. Cl.: H04W 24/10, H04B 7/024, H04B 7/06, H04W 84/12

(54) **SYSTEMS AND METHODS FOR DOWNLINK CHANNEL-SOUNDING WITH MULTIPLE ACCESS POINTS**

(30) Priority: 31.10.2023 US 202363594538 P; 08.01.2024 US 202463618631 P; 01.05.2024 US 202418652150
(71) Applicant: Avago Technologies International Sales Pte. Limited, Singapore 768923 (SG)
(72) Inventor: Puducheri Sundaravaradhan, Srinath, Irvine, 92618 (US); Porat, Ron, Irvine, 92618 (US); Nassiri Toussi, Karim, Irvine, 92618 (US)
(74) Representative: Bosch Jehle Patentanwaltsgesellschaft mbH

(57) **Abstract**

The disclosure describes systems and methods for downlink channel sounding in multi-access point (multi-AP) networks. The system can be configured to provide one or more sounding options. In joint sounding options, stations can measure the combined downlink channel from all the APs and can provide feedback on the composite channel. In individual sounding options, stations can measure the downlink channel from each AP separately and can provide feedback on the individual channels. In implicit sounding options, each AP can estimate the uplink channel transmitted by the stations. The uplink channel information can then be used to derive the corresponding downlink channel.

## Description

This application claims the benefit of and priority to a U.S. Provisional Application No. 63/618,631, filed January 8th, 2024, and a U.S. Provisional Application No. 63/594,538, filed October 31st, 2023, the content of each of which is incorporated herein by reference in its entirety.

This disclosure generally relates to systems and methods for wireless communication between access points and wireless communication devices, including, without limitation, downlink channel sounding with multiple access-points.

The market for wireless communications devices has been growing due to increased use of portable devices, increased connectivity, and data transfer between all manners of devices. Digital switching techniques have facilitated the large scale deployment of affordable, easy-to-use wireless communication networks. Wireless communication can operate in accordance with various standards, such as the IEEE 802.11x (e.g., Wi-Fi technology), Bluetooth, global system for mobile communications (GSM), code division multiple access (CDMA). Using such technologies, wireless communication devices can connect to local area networks and the internet without physical cables, communicating over radio frequencies and across various spaces and ranges.

The technical solutions of the present disclosure are directed to facilitating downlink channel-sounding with multiple access points. Wireless communication techniques, such as coordinated beamforming with nulling (CBF), can rely on downlink channel-state information (CSI) for better performance. However, obtaining a cross-basic service set (BSS) downlink CSI can present technical challenges. In configurations with multiple access points (APs) belonging to different BSSes, current networking standards can limit the ability to gather CSI between access points (APs) and stations (STAs) outside their own BSS. For example, an AP (AP1) from BSS1 can desire to acquire downlink channel conditions between another AP (AP2) from BSS2 and the STAs associated with BSS2. This information can be used for techniques such as CBF, where nulling interference desires knowledge of the downlink channels between all relevant APs and STAs, even if they belong to different BSSes. As a result, the inability to gather downlink CSI across different BSSs can hinder the effectiveness of wireless communication techniques in environments with multiple APs. The technical solutions described herein can overcome these challenges by introducing various sounding procedures and frame sequences for acquiring cross-BSS downlink CSI.

At least one aspect of the technical solutions is directed to a system. The system can include a first access point (AP) configured to transmit a null-data packet announcement (NDPA) frame to trigger a sounding process for a first set of one or more stations of the first AP. The NDPA frame can include a station information field with an association identifier (AID) value. The system can include a second AP, responsive to the AID value, to trigger the sounding process for a second set of one or more stations of the second AP with respect to the first AP. Both the first AP and the second AP can be configured to send one of a joint-null-data packet (NDP) frame or sequential NDP frames to the first set of one or more stations of the first AP and the second set of one or more stations of the second AP. The first set of one or more stations of the first AP and the second set of one or more stations of the second AP can be configured to measure the downlink (DL) channel from each of the first AP and the second AP to form a composite channel. The first AP can be configured to transmit a beamforming report (BFRP) frame for the composite channel. The first AP can be configured to receive, from each station receiving the BFRP frame, a trigger-based physical layer protocol data unit (PPDU) to provide channel-state information (CSI) based on the composite channel.

The first AP and the second AP can exchange one or more parameters. The one or more parameters can include at least one of a carrier frequency offset (CFO) for alignment of frequency or a sampling frequency offset (SFO) for alignment of timing of wireless communications. The NDPA can include information indicative of at least one of the following: a type of the sounding process, a type of a channel state information (CSI) requested or information on beamforming configuration, timing, or duration. The BFRP frame can include data corresponding to one or more stations of the first set of one or more stations and the second set of one or more stations. The data can be indicative of at least one of the following: a modulation and coding scheme, a spatial stream allocation, or a resource unit of the one or more stations.

The trigger-based PPDU transmitted by each station can provide the CSI including at least one of the following: beamforming report, a beamforming matrix index, a signal-to-noise ratio, or a metric of a performance of a modulation scheme. The first AP can dynamically adjust beamforming parameters based on the received trigger-based PPDU feedback according to a performance of a downlink channel for each station in the first set of one or more stations. The first AP can coordinate with the second AP to synchronize the timing and parameters of the sounding process to ensure accurate measurement of the composite channel by the stations in both sets.

An aspect of the technical solutions is directed to a system. The system can include a second AP configured to transmit a null-data packet announcement (NDPA) frame to a second set of one or more stations within a basic service set (BSS) of the second AP. The NDPA can include a field to signal to a first AP to prepare for transmission of a null-data packet (NDP) frame. The first AP can be configured to transmit the NDP frame to trigger a sounding process to a first set of one or more stations of the first AP and the second set of one or more stations of the second AP. A preamble of the NDP frame can identify the BSS of the second AP. The second set of one or more stations can receive the NDP frame to measure a downlink (DL) channel with respect to the first AP. The second AP can be configured to transmit one or more beamforming report (BFRP) frames for measurement of the downlink channel from the second set of one or more points with respect to the first AP. The second AP can be configured to receive, from each station of the second set of one or more stations receiving the one or more BFRP frames, a trigger-based physical layer protocol data unit (PPDU) to provide channel-state information (CSI) based on the downlink channel.

The field of the NDPA frame can include an association identifier (AID) having a predetermined value to trigger the first AP to prepare the NDP frame. The NDPA frame transmitted by the second AP can be configured to indicate to one or more stations of the BSS of the second AP a desired CSI to provide and to signal to the first AP to prepare for the transmission of the NDP frame. The NDP frame transmitted by the first AP can signal a BSS color in a preamble corresponding to the BSS of the second AP.

The second set of one or more stations of the second AP can transmit, in response to the one or more BFRP frames including one or more parameters, the trigger-based PPDU. The trigger-based PPDU can include a compressed beamforming report (CBR) including one or more measurements of the downlink channel taken according to the one or more parameters. The NDPA frame and the one or more BFRP frames each can include one or more medium access control (MAC) addresses and one or more association identifiers (AIDs) corresponding to one or more stations of the second set of one or more stations of the second AP. The first AP and the second AP can exchange communication to determine a type of CSI to gather on the downlink channel and identify the determined type of CSI in the one or more BFRP frames. The second AP can be configured to identify, based at least on information on a station of the first set of one or more stations of the first AP, the station of the first set to participate in coordinated beamforming with nulling (CBF). The second AP can be configured to transmit the NDPA frame to the station of the first set to request the CSI from the station to configure the second AP for CBF.

An aspect of the technical solutions is directed to a system. The system can include a first access point (AP) configured to transmit an implicit null-data packet announcement (NDPA) frame to solicit an uplink triggered NDP (T-NDP) frame from a first set of one or more stations of the first AP. The NDPA frame can include a field to signal to a second AP to prepare for receiving transmission of the T-NDP frame. The NDPA frame can identify one or more parameters for the transmission of the T-NDP frame. The first AP and the second AP can be configured to receive the T-NDP frame from the first set of one or more stations of the first AP. The first AP and the second AP can be configured to estimate respective uplink channels based at least on the T-NDP frame.

The NDPA frame can further include parameters for the T-NDP. The parameters can include at least one of the following: a bandwidth, a number of long training fields (LTFs), a length of an LTF, a guard interval, a spatial-stream position, a number of spatial streams, or an allocation of resource units. The first set of one or more stations can estimate their respective carrier frequency offsets (CFOs) and sampling frequency offsets (SFOs) based at least on the data on the first AP from the T-NDP frame. The first AP and the second AP can exchange their respective estimates of uplink channels along with a coefficient to map the respective estimates of uplink channels to one or more downlink channels. The first AP and the second AP can synchronize their receptions of the T-NDP frame to estimate uplink channels concurrently.

At least one aspect of the technical solutions is directed to a method. The method can include a first access point (AP) transmitting a null-data packet announcement (NDPA) frame to trigger a sounding process for a first set of one or more stations of the first AP. The NDPA frame can include a station information field with an association identifier (AID) value. The method can include a second AP, responsive to the AID value, triggering the sounding process for a second set of one or more stations of the second AP with respect to the first AP. The method can include both the first AP and the second AP sending one of a joint-null-data packet (NDP) frame or sequential NDP frames to the first set of one or more stations of the first AP and the second set of one or more stations of the second AP. The method can include the first set of one or more stations of the first AP and the second set of one or more stations of the second AP measuring the downlink (DL) channel from each of the first AP and the second AP to form a composite channel. The method can include the first AP transmitting a beamforming report (BFRP) frame for the composite channel. The method can include the first AP receiving, from each station receiving the BFRP frame, a trigger-based physical layer protocol data unit (PPDU) to provide channel-state information (CSI) based on the composite channel.

The method can include the first AP and the second AP exchanging one or more parameters. The one or more parameters can include at least one of a carrier frequency offset (CFO) for alignment of frequency or a sampling frequency offset (SFO) for alignment of timing of wireless communications. The NDPA can include information indicative of at least one of the following: a type of the sounding process, a type of a channel state information (CSI) requested or information on beamforming configuration, timing, or duration. The BFRP frame can include data corresponding to one or more stations of the first set of one or more stations and the second set of one or more stations. The data can be indicative of at least one of the following: a modulation and coding scheme, a spatial stream allocation, or a resource unit of the one or more stations.

The method can include the trigger-based PPDU transmitted by each station providing the CSI including at least one of the following: beamforming report, a beamforming matrix index, a signal-to-noise ratio, or a metric of a performance of a modulation scheme. The method can include the first AP dynamically adjusting beamforming parameters based on the received trigger-based PPDU feedback according to a performance of a downlink channel for each station in the first set of one or more stations. The method can include the first AP coordinating with the second AP to synchronize the timing and parameters of the sounding process to ensure accurate measurement of the composite channel by the stations in both sets.

An aspect of the technical solutions is directed to a method. The method can include a second AP transmitting a null-data packet announcement (NDPA) frame to a second set of one or more stations within a basic service set (BSS) of the second AP. The NDPA can include a field to signal to a first AP to prepare for transmission of a null-data packet (NDP) frame. The method can include the first AP transmitting the NDP frame to trigger a sounding process to a first set of one or more stations of the first AP and the second set of one or more stations of the second AP. A preamble of the NDP frame can identify the BSS of the second AP. The method can include the second set of one or more stations receiving the NDP frame to measure a downlink (DL) channel with respect to the first AP. The method can include the second AP transmitting one or more beamforming report (BFRP) frames for measurement of the downlink channel from the second set of one or more points with respect to the first AP. The method can include the second AP receiving, from each station of the second set of one or more stations receiving the one or more BFRP frames, a trigger-based physical layer protocol data unit (PPDU) to provide channel-state information (CSI) based on the downlink channel.

The field of the NDPA frame can include an association identifier (AID) having a predetermined value to trigger the first AP to prepare the NDP frame. The method can include the NDPA frame transmitted by the second AP indicating the one or more stations of the BSS of the second AP a desired CSI to provide and to signal to the first AP to prepare for the transmission of the NDP frame. The method can include the NDP frame transmitted by the first AP signaling a BSS color in a preamble corresponding to the BSS of the second AP.

The method can include the second set of one or more stations of the second AP transmitting, in response to the one or more BFRP frames including one or more parameters, the trigger-based PPDU. The trigger-based PPDU can include a compressed beamforming report (CBR) including one or more measurements of the downlink channel taken according to the one or more parameters. The NDPA frame and the one or more BFRP frames each can include one or more medium access control (MAC) addresses and one or more association identifiers (AIDs) corresponding to one or more stations of the second set of one or more stations of the second AP. The method can include the first AP and the second AP exchanging communication to determine a type of CSI to gather on the downlink channel and identify the determined type of CSI in the one or more BFRP frames. The method can include the second AP identifying, based at least on information on a station of the first set of one or more stations of the first AP, the station of the first set to participate in coordinated beamforming with nulling (CBF). The method can include the second AP transmitting the NDPA frame to the station of the first set to request the CSI from the station to configure the second AP for CBF.

An aspect of the technical solutions is directed to a method. The method can include a first access point (AP) transmitting an implicit null-data packet announcement (NDPA) frame to solicit an uplink triggered NDP (T-NDP) frame from a first set of one or more stations of the first AP. The NDPA frame can include a field to signal to a second AP to prepare for receiving transmission of the T-NDP frame. The method can include the NDPA frame identifying one or more parameters for the transmission of the T-NDP frame. The method can include the first AP and the second AP receiving the T-NDP frame from the first set of one or more stations of the first AP. The method can include the first AP and the second AP estimating respective uplink channels based at least on the T-NDP frame.

The NDPA frame can further include parameters for the T-NDP. The parameters can include at least one of the following: a bandwidth, a number of long training fields (LTFs), a length of an LTF, a guard interval, a spatial-stream position, a number of spatial streams, or an allocation of resource units. The method can include the first set of one or more stations estimating their respective carrier frequency offsets (CFOs) and sampling frequency offsets (SFOs) based at least on the data on the first AP from the T-NDP frame. The method can include the first AP and the second AP exchanging their respective estimates of uplink channels along with a coefficient to map the respective estimates of uplink channels to one or more downlink channels. The method can include the first AP and the second AP synchronizing their receptions of the T-NDP frame to estimate uplink channels concurrently.

According to an aspect, a system is provided comprising:
a first access point (AP) configured to transmit a null-data packet announcement (NDPA) frame to trigger a sounding process for a first set of one or more stations of the first AP, wherein the NDPA is configured to trigger a second AP to transmit sounding information;
wherein both the first AP and the second AP are configured to transmit sounding information to the first set of one or more stations of the first AP, each station of the first set of one or more stations of the first AP to measure the downlink (DL) channel from each of the first AP and the second AP based on the sounding information to form a composite channel;
wherein the sounding information comprises one of a joint-null-data packet (NDP) frame or sequential NDP frames;
wherein the first AP is configured to transmit a beamforming report poll (BFRP) frame for the composite channel; and
wherein the first AP is configured to receive, from the each station of the first set of the one or more stations receiving the BFRP frame, a trigger-based physical layer protocol data unit (PPDU) to provide channel-state information (CSI) based on the respective composite channel of the each station of the first set of the one or more stations.

Advantageously, the first AP is configured to transmit a second NDPA frame to trigger a second sounding process for the first set of one or more stations of the first AP and to transmit a second BFRP frame responsive to the second sounding process, wherein the second NDPA frame does not trigger the second AP to transmit sounding information, wherein the NDPA frame and the second NDPA frame are configured to include identical values for one or more medium access control (MAC) addresses and for one or more association identifiers (AIDs) corresponding to one or more stations of the first set of one or more stations of the first AP, and wherein the BFRP frame and the second BFRP frame are configured to include identical values for one or more MAC addresses and one or more AIDs corresponding to one or more stations of the first set of one or more stations of the first AP.

Advantageously, the NDPA comprises information indicative of at least one of: a type of the sounding process, a type of a channel state information (CSI) requested or information on beamforming configuration, timing or duration.

Advantageously, the BFRP frame includes transmission parameters corresponding to one or more stations of the first set of one or more stations, wherein the transmission parameters are configured to allow the second AP to decode a channel state information (CSI) from the trigger-based PPDU, the data indicative of at least one of: a modulation and coding scheme, a spatial stream allocation or a resource unit of the one or more stations and wherein each station of the first set of one or more stations transmits a trigger-based PPDU with the CSI according to the transmission parameters and the second AP is configured to receive the trigger-based PPDU from the first set of one or more stations to decode the CSI.

Advantageously, the trigger-based PPDU transmitted by each station provides the CSI including at least one of: beamforming report addressed to the first AP using a medium access control (MAC) address of the first AP, a beamforming matrix index, a signal-to-noise ratio, or a metric of a performance of a modulation scheme.

Advantageously, the NDPA frame includes a station information field with an association identifier (AID) value and wherein the second AP is configured to transmit sounding information responsive to the AID value.

Advantageously, the second AP synchronizes with the first AP, based on the NDPA and at least one of: a timing and parameters of the sounding process, a carrier-frequency offset (CFO) or a sampling-frequency offset (SFO) of the second AP with respect to the first AP.

According to an aspect, a system comprises:
a second AP configured to transmit a null-data packet announcement (NDPA) frame to a second set of one or more stations within a basic service set (BSS) of the second AP, the NDPA comprising a field to trigger a first AP to transmit a null-data packet (NDP) frame;
wherein the first AP is configured to transmit the NDP frame to trigger a sounding process to the second set of one or more stations of the second AP, the second set of one or more stations receiving the NDP frame to measure a downlink (DL) channel with respect to the first AP; and
wherein the second AP is configured to transmit one or more beamforming report poll (BFRP) frames to trigger feedback comprising channel-state information (CSI) from the second set of one or more stations, based on a measurement of the DL channel with respect to the first AP.

Advantageously, the field of the NDPA frame comprises an association identifier (AID) having a predetermined value to trigger the first AP to prepare for transmission of the NDP frame.

Advantageously, the NDPA frame transmitted by the second AP is configured to indicate to the second set of one or more stations the type of CSI to feedback, wherein the one or more BFRP frames are configured to specify for each station of the second set of one or more stations transmission parameters to transmit a trigger-based physical layer protocol data unit (TB-PPDU) comprising the CSI.

Advantageously, the NDP frame transmitted by the first AP indicates a BSS color in a preamble corresponding to the BSS of the second AP.

Advantageously, the second AP is configured to receive from each station of the second set of one or more stations receiving the one or more BFRP frames a trigger-based physical layer protocol data unit (PPDU) to provide channel-state information (CSI) based on the downlink channel and wherein the second set of one or more stations of the second AP transmit, in response to the one or more BFRP frames including one or more parameters, the trigger-based PPDU comprising a compressed beamforming report (CBR) including one or more measurements of the downlink channel, wherein the trigger-based PPDU is transmitted according to the transmission parameters specified in the BFRP.

Advantageously, the NDPA frame and the one or more BFRP frames each include a first medium access control (MAC) address and a first association identifier (AID) to address one or more stations of the second set of one or more stations and wherein the second AP is configured to include the first MAC address and the first AID in each of a second NDPA frame and a second BFRP frame to address the one or more stations of the second set of one or more stations; wherein the second NDPA frame does not trigger the first AP to transmit a second NDP frame.

Advantageously, transmission parameters specified in the BFRP for the TB PPDU are configured for the first AP to decode transmissions from the second set of one or more stations; and wherein the first AP is configured to receive a trigger-based physical layer protocol data unit (PPDU) from each station of the second set of one or more stations according to the transmission parameters specified in the BFRP.

Advantageously, the second AP is configured to:
wherein the second AP forwards the CSI from at least one station of the second set of one or more stations to the first AP.

According to an aspect, a system is provided comprising:
a first access point (AP) configured to transmit an implicit null-data packet announcement (implicit-NDPA) frame to solicit an uplink triggered NDP (T-NDP) frame from a first set of one or more stations of the first AP, the implicit-NDPA frame comprising a field to indicate to a second AP to prepare for receiving transmission of the T-NDP frame, the implicit-NDPA frame identifying one or more parameters for the transmission of the T-NDP frame;
wherein the first AP and the second AP are configured to receive the T-NDP frame from the first set of one or more stations of the first AP; and
wherein the first AP and the second AP are configured to estimate respective uplink channels based at least on the T-NDP frame.

Advantageously, the implicit-NDPA frame further comprises parameters for the T-NDP, the parameters including at least one of: a bandwidth, a number of long training fields (LTFs), a length of an LTF, a guard interval, a spatial-stream position, a number of spatial streams or an allocation of resource units.

Advantageously, the first set of one or more stations estimate their respective carrier frequency offsets (CFOs) and sampling frequency offsets (SFOs) relative to the first AP based at least on the data on the first AP from the implicit-NDPA frame.

Advantageously, the first AP and the second AP exchange their respective estimates of uplink channels along with a coefficient to map the respective estimates of uplink channels to one or more downlink channels.

Advantageously, one or more medium access control (MAC) addresses and one or more association identifiers (AIDs) used by the first AP in the implicit-NDPA frame to address the first set of one or more stations are identical to one or more MAC addresses and one or more AIDs used by the first AP in a second NDPA frame to address the first set of one or more stations, wherein the second NDPA frame does not address the second AP.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations;
FIGS. 1B and 1C are block diagrams depicting computing devices useful in connection with the methods and systems described herein;
FIG. 2 illustrates an example system of coordinated partial rank nulling in a multiple AP and multiple STA environment;
FIG. 3 is an example plot of a signal-space of a STA transmission in the context of a single AP partial-rank nulling;
FIG. 4 is an example plot of two signal-spaces two STA transmissions in the context of 2 AP coordinated partial-rank nulling;
FIG. 5 illustrates an example system of downlink channel-sounding with multiple access points;
FIG. 6 is an example flow of a method of implementing downlink channel joint-sounding with multiple access points;
FIG. 7 is another example flow of a method of implementing downlink channel joint-sounding with multiple access points;
FIG. 8 is another example flow of a method of implementing downlink channel joint-sounding with multiple access points;
FIG. 9 is another example flow of a method of implementing downlink channel joint-sounding with multiple access points;
FIG. 10 is another example flow of a method of implementing downlink channel joint-sounding with multiple access points;
FIG. 11 is an example flow of a method of implementing downlink channel individual-sounding with multiple access points;
FIG. 12 is another example flow of a method of implementing downlink channel individual-sounding with multiple access points;
FIG. 13 is another example flow of a method of implementing downlink channel individual-sounding with multiple access points;
FIG. 14 is another example flow of a method of implementing downlink channel individual-sounding with multiple access points;
FIG. 15 is another example flow of a method of implementing downlink channel individual-sounding with multiple access points;
FIG. 16 is another example flow of a method of implementing downlink channel individual-sounding with multiple access points;
FIG. 17 is another example flow of a method of implementing downlink channel individual-sounding with multiple access points;
FIG. 18 is another example flow of a method of implementing downlink channel individual-sounding with multiple access points;
FIG. 19 is another example flow of a method of implementing downlink channel individual-sounding with multiple access points;
FIG. 20 is an example flow of a method of implementing downlink channel implicit-sounding with multiple access points;
FIG. 21 is another example flow of a method of implementing downlink channel implicit-sounding with multiple access points; and
FIG. 22 is another example flow of a method of implementing downlink channel implicit-sounding with multiple access points.

The details of various embodiments of the methods and systems are set forth in the accompanying drawings and the description below.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein;
- Section B describes coordinated partial-rank nulling in multi-AP transmissions.
- Section C describes embodiments of downlink channel sounding with multiple access points.

### A. Computing and Network Environment

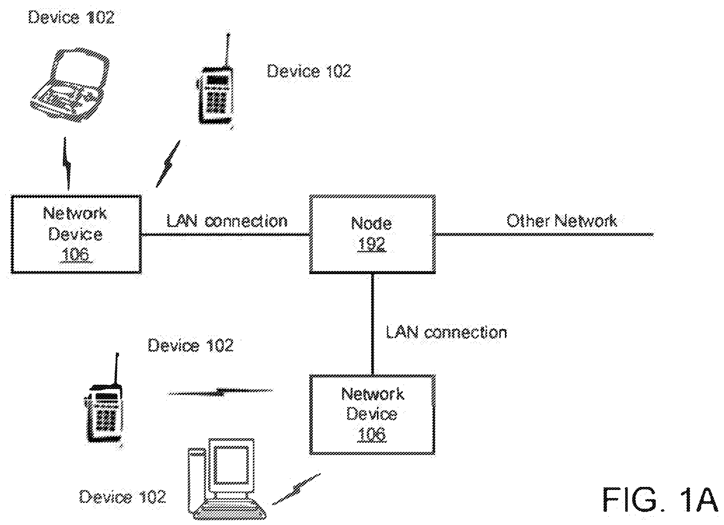

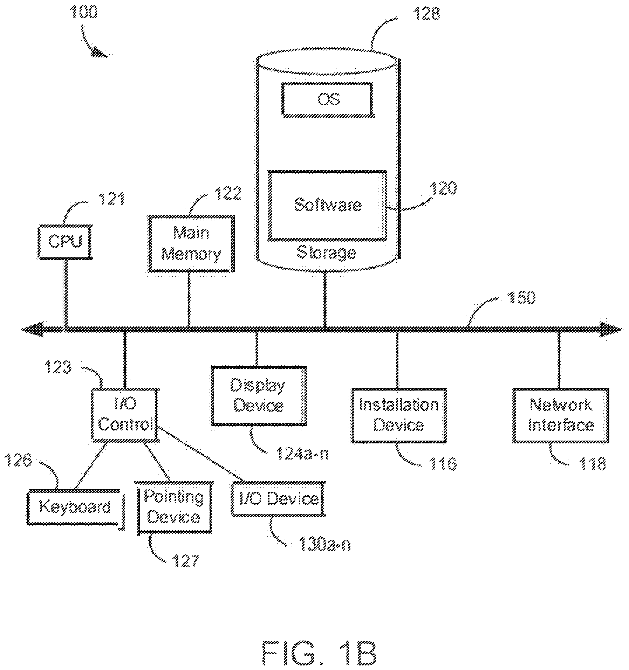

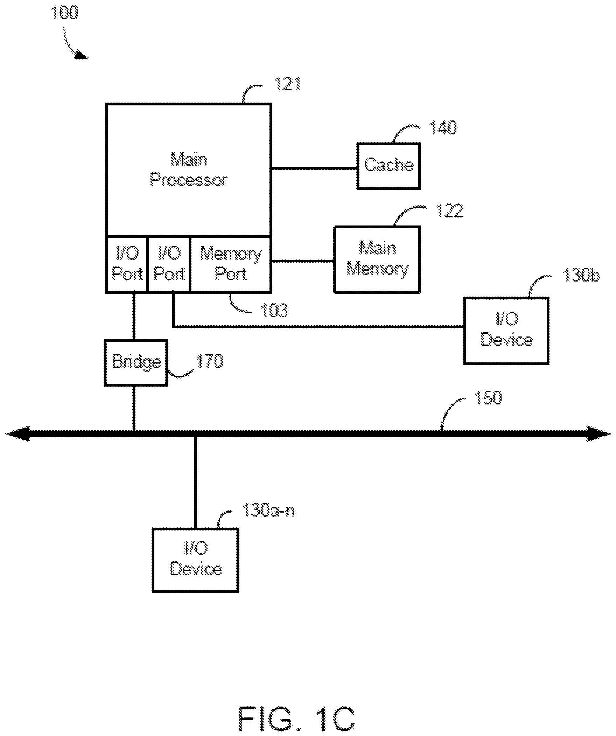

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (Wi-Fi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Coordinated Partial-Rank Nulling in Multi-Ap Transmissions

When an APs transmits data to a particular intended recipient STA within its own basic service set (BSS), other STAs within the same, or a neighboring BSSs (e.g., other WLANs) can be within the range of the transmitting AP and experience interference. Interference can include any undesired disruption or degradation of a signal, communication, or system caused by the presence of an external signal, noise, or other factors that interfere with the intended transmission or reception of information. For instance, when transmissions destined for different STAs simultaneously occur on the same channels, interferences caused by the transmissions can be difficult to resolve as the information from one or more of the transmissions may be unknown and a relationship between the transmissions may be unknown. Such interferences can cause latencies, delays or dropped network packets, making data transmissions within such networks more difficult, adversely affecting user experience.

The technical solutions of the present disclosure overcome these challenges by providing or facilitating a multi-AP coordinated beamforming with nulling (CBF) in which APs from different BSSs (e.g., WLANs) can configure their transmissions to be sent along spatial directions or vectors at which interferences from those APs are minimized at unintended recipient STAs or clients. The technical solutions can include client devices (STAs), receiving spatial streams from the APs of their respective networks. A network, such as a WLAN of a particular AP, can include one or more basic service sets (BSS) having an AP and one or more STAs configured for wireless communication via the same AP, such as by being configured to the local WLAN of the AP. As APs may transmit any number of data streams to any number of STAs within their BSS, STAs for which the data stream is not intended may be within the wireless communication range of the transmitting AP and experience interference. The technical solutions of the present disclosure can utilize spatial orientations of the unintended STA recipients and beamforming functionalities of the APs to transmit data streams to their intended STAs along the spatial orientations at which these transmissions are partially nulled at the unintended recipient locations. In doing so, the technical solutions of the present solution allow multiple APs to communicate at the same time and frequency (e.g., simultaneous transmissions on the same channel), while avoiding interferences, thereby increasing throughput of the transmissions, decreasing latency and minimizing the spectrum use to avoid interference.

Technical solutions of the present disclosure can include systems and methods of multi-AP coordinated-beamforming (CBF) with nulling to facilitate coordinated partial-rank nulling in multi-AP transmissions. CBF with nulling can include one of the candidate features being considered for the next-generation Wi-Fi standard (UHR, 11bn). Nulling can include any reduction or cancellation on unwanted signals or interference at a receiver, such as by adjusting the phase and amplitude of incoming signals. Nulling can include a technique in which an AP minimizes interference experienced by a STA by selectively reducing the strength or power of unwanted signals from other sources. Nulling can include a technique in which a system can combine a signal with another signal in order to create a null (e.g., cancel out the original signal. Nulling can be utilized or included to minimize an AP interference seen by a STA due to the AP's transmissions to other STAs (either in the same or different BSS as the first STA).

Partial-rank nulling, sometimes also referred to as partial nulling, can include an AP minimizing (e.g., reducing below an acceptable threshold) interference in a smaller number of dimensions or directions than what a STA can receive. For instance, partial-rank nulling can include a technique for minimizing or reducing an unwanted signal or an interference (e.g., to below an acceptable threshold level) without eliminating the interference. For example, if a STA has two receive-antennas (i.e., can receive signals in two dimensions or directions), partial-rank nulling can minimize interference along only one dimension or direction as seen by the STA. The present solution can provide a mechanism of coordinated partial-rank nulling that minimizes the interference at a STA, with both its self-BSS as well as other-BSS (OBSS) in which APs transmit communications concurrently. The technical solutions can also include AP-coordination mechanisms to achieve the above partial-rank nulling.

Partial-rank nulling with self-BSS and other-BSS access points can be implemented in wireless communication systems. For example, in a multiuser multiple-input multiple-output (MU-MIMO) system, partial-rank nulling can be used to improve the overall system performance by mitigating interference between multiple communication devices. For example, multiple devices can simultaneously transmit and receive data via their antennas. Due to the spatial proximity between the devices, interferences can occur between different devices. Interferences can degrade the performance of the system, leading to lower data rates and reduced overall capacity. Partial-rank nulling with self BSS and other-BSS access points can address this issue by selectively nulling interferences at unintended recipient STAs.

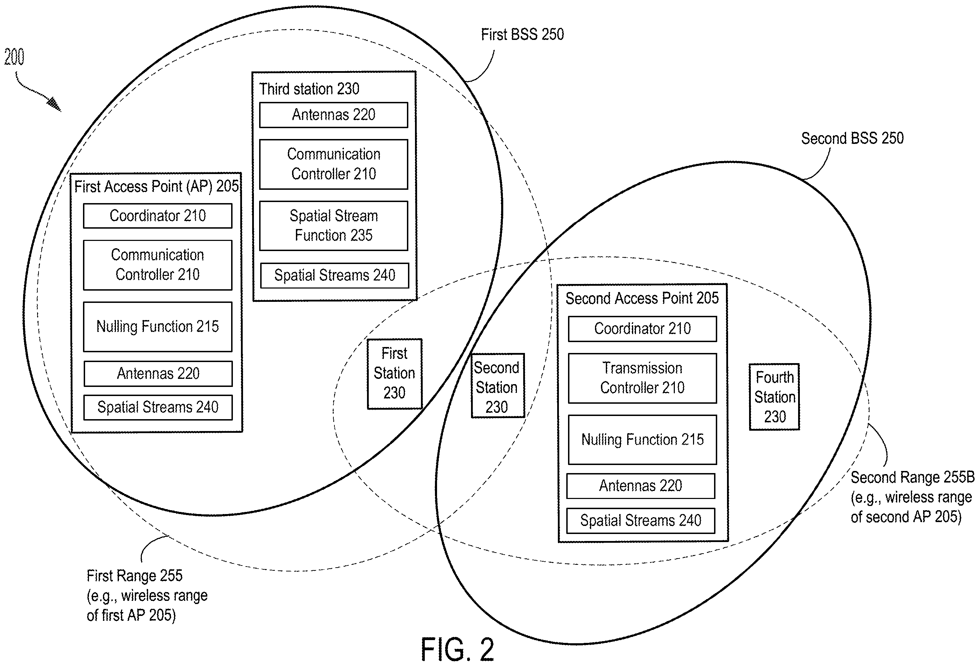

Referring now to FIG. 2, an example of a system 200 for implementing a coordinated partial-rank nulling with multi-AP transmissions is illustrated. System 200 can include one or more access points (APs) 106 (e.g., Wi-Fi routers) providing transmissions to stations or STAs 102 within their BSSs 250. APs 106 can also have wireless transmission ranges 255 that can include STAs 102 outside of their BSS (e.g., STAs not configured to the WLANs of the respective APs, but still capable of receiving transmissions or interferences from those APs).

FIG. 2 can include a first AP 106 having a first BSS 250 including first station 102 and a second station 102, as well as a second AP 106 having a second BSS 250 including a second station 102 and a fourth station 102. Each of the first and second APs 106 can include one or more coordinators 205, communication controllers 210, nulling functions 215, antennas 220 and spatial streams 240. Each of the STAs 102 (e.g., first, second, third and fourth stations 102 in system 200) can include one or more antennas 220, communication controllers 210, spatial stream functions 235 and spatial streams 240. In addition to the STAs 102 within their own BSSs 250, each of the APs 106 can also have a wireless signal range 255 which can cover or include the STAs 102 of their own BSS 250, but also STAs 102 that are outside of their BSS 250. For example, in addition to the first and third STAs 102, the first range 255 of the first AP 106 can include the second STA 102 (e.g., from the BSS of the second AP 106). Similarly, in addition to the second and fourth STAs 102, the second AP 106 can have a second signal range 255 that can include the first STA 102 (e.g., from the BSS of the first AP 106)

FIG. 2 can illustrate an environment in which APs 106 can coordinate their transmissions according to their prior-negotiated and configured partial-rank nulling. For instance, system 200 can be used to provide single-AP partial-rank nulling (e.g., partially nulling interferences to non-recipient STAs within the BSS of the transmitting AP) and multi-AP partial-rank nulling (e.g., partially nulling interferences to non-recipient STAs within the same or a different BSS with respect to the transmitting AP).

AP 106 can include any combination of hardware and software that allows wireless communication devices, such as STAs 102, to connect wirelessly to a wired network or world wide web or internet. AP 106 can include any combination of hardware and software for facilitating wireless communication within a WLAN of the AP for any STAs 102 that are included in its BSS 250. APs 106 can include one or more communication devices, such as Wi-Fi routers, switches, Bluetooth hubs, cellular network base stations and can utilize any wireless communication protocols or standards, such as 802.11bn for wireless communication.

APs 106 and STAs 102 can be configured for wireless communication in wireless communication networks, such as a LAN, WAN or a cellular network. For example, each AP 106 can include, be associated with, be coupled with, provide or facilitate a communication network, such as WLAN of a Wi-Fi for any clients or stations 102 of its own basic service set (BSS).

BSS 250 can include any one or more APs and client devices (e.g., STAs 102) coupled to the AP within a particular coverage area, such as a range 255. BSS 250 can provide an infrastructure for the AP 106 to provide network communication to STAs 102 within its frequency coverage area. Within a BSS 250, an AP 106 can manage data distribution to various connected devices (e.g., STAs 102), facilitate implementation of security protocols or functions and roaming as STAs 102 may move in and out of its coverage area (e.g., range 255). Range 255 can include an area to which signals from the AP 106 can reach to recipient STAs 102. Range 255 can include STAs 102 that are within the BSS 250 of the given AP 106 or STAs 102 that are a part of BSS 250 of another AP 106, such as for example, first STA 102 which is a part of the first BSS 250 of the first AP 106, but also within a second range 255 of the second AP 106 servicing second and fourth STAs 102 of the second BSS 250.

Coordinator 205 can include any combination of hardware and software for coordinating communications between APs 106 and/or STAs 102. Coordinator 205 can include functionality (e.g., applications, computer code or programs) facilitating coordination of communication (e.g., transmissions) between APs 106 and STAs 102 or among APs 106. Coordinator 205 can include functionality for implementing a coordination phase to identify STAs 102 for which interference can be wholly or partially nulled and exchanging STA 102 information between APs 106. Coordinator 205 can include functionality for coordinating timing and frequencies, such as exchanging timing and frequencies information (e.g., communication bands or channels) between APs 106. Coordinator 205 can generate, facilitate, implement and apply settings or configurations to APs 106 and/or STAs 102 to facilitate coordinated partial-rank nulling.

Coordinator 205 can include a precoder functionality, such as a precoder algorithm for computing beamforming vectors for each STA 102 to achieve partial-rank nulling. Precoder can include a functionality for computing directions or vectors for beamforming transmissions to STAs 102. Precoder can include a functionality for utilizing information or data on directions or vectors at the STAs 102 at which interference is minimized or reduced below a threshold for acceptable level of interference (e.g., partial-rank nulling is achieved) to determine directions or vectors for beamforming transmissions to perform partial-rank nulling at such STAs 102.

Coordinator 205 can include the functionality to perform channel-sounding to STAs 102. For example, coordinator 205 can facilitate, instruct or request each STA to measure one or more MIMO channels for each sounding AP and provide measurements back to the coordinator 205. The relative phase-offsets across receive antennas 220 for the STA 102 can be maintained at constant values when measuring channels for different APs 106. Coordinator 205 can exchange with the STAs 102 estimates of the MIMO channel for a sounding AP (e.g., via a compressed beamforming report format (CBR), as provided in 802.11, or in Cartesian form). Coordinator 205 can exchange information for interfering APs 106 (e.g., APs 106 from external BSSs 250), such as when STAs 102 provide linear transformation of the MIMO channel from that particular interfering AP 106. The linear transformation can be determined using previously measured MIMO channel between the STA and its own AP 106 (e.g., AP 106 of STA's BSS 250). For example, linear transformation of the MIMO channel could represent projection onto one or more eigen-models of the MIMO channel measured between the STA and the AP 106 of STA's own BSS. For example, coordinator 205 can exchange (e.g., receive) set of directions in which an AP 106 is to minimize interference if the STA is receiving a particular number of intended spatial streams from its own AP 106 (e.g., AP 106 from STA's own BSS 250).

Coordinator 205 can include the functionality for facilitating or performing channel-sounding to STAs 102. Channel sounding can include transmitting sounding information, such as, signals and receiving, in response, characteristics, such as signal strength, delay and phase, and then using such received characteristics determine the quality of the communication channels. Coordinator 205 can transmit (e.g., individually or jointly with APs 106 of other BSSs 250) one or more null-data-packets (NDPs). NDPs can be synchronized in time and/or frequency (e.g., between multiple APs 106 performing simultaneous channel sounding). The number of sounding dimensions in the NDP can include a total number of antennas across the APs. Jointly transmitted NDPs can be preceded by one or more NDP announcement (NDPA) frames. For example, an AP 106 can transmit an NDPA on behalf of all APs 106 performing channel sounding to all the STAs 102 being sounded. For example, each of the APs 106 sends an NDPA sequentially to their own STAs 102. For example, all APs 106 transmit their NDPAs at the same time but separated in frequency (e.g., via OFDMA) with each AP 106 addressing the STAs 102 within its own BSS 250. For example, coordinator 205 can provide or facilitate trigger frames transmitted by the AP 106, based on which all the APs 106 participating in channel sounding can synchronize their carrier frequency offsets (CFOs) and the start time of their coordinated transmissions.

Communication controllers 210 can include any combination of hardware and software for implementing wireless communications between APs 106 and STAs 102. Communication controller 210 can include the functionality for providing and transmitting data (e.g., spatial streams) to the intended STAs 102. Communication controller 210 can transmit messages to STAs 102, such as inquiring about information, data or description of directions or vectors in which interferences are to be minimized at each STA 102. Communication controller 102 can include the functionality for configuring for transmission features of the AP 106 to perform and implement the transmissions of the spatial streams 240 in accordance with partial-rank nulling. For instance, communication controller 210 can configure antennas 220 and any other settings to facilitate or implement transmissions of spatial streams 240 according to the specific directions or vectors (e.g., as determined by the coordinator 205), to implement partial-rank nulling at the specific STAs 102. Communication controller 210 can control, manage and implement the transmissions (e.g., communications) in accordance with the timing and frequency (e.g., selected channels or bands), as well as in directions or vectors in which partial-rank nulling is implemented.

APs 106 and/or STAs 102 can include communication controllers 210 to facilitate wireless communications with each other. Communication controllers 210 can include and/or utilize wireless communication interfaces, such as hardware and software, including transceivers, antennas, RF interfaces, ports and processing devices facilitating communications via standards, such as 802.11a/b/g/n/ac/ax, Bluetooth, Cellular (e.g., 3G, 4G, 5G), Zigbee, Z-Wave, NFC and others. Communication controllers 210 can control receiving and transmission of signals, data, or messages to facilitate or implement the multi-AP transmissions using coordinated partial-rank nulling.

APS 106 can include nulling functions 215 for implementing nulling or partial-rank nulling per coordinated (e.g., agreed upon) communications between the APs 106. Partial-rank nulling can include any technique or action in array signal processing for suppressing interference from signals from specific directions while preserving signals arriving from other directions. For example, partial-rank nulling can include manipulating the array response to create nulls or zeros in the radiation pattern in interference from a particular direction. Nulling function 215 can include any combination of hardware and software for reducing or cancelling unwanted signals or interference at a receiver (e.g., STA 102), such as by adjusting the phase and amplitude of incoming signals. Nulling function 215 can include any combination of hardware and software for minimizing or reducing an unwanted signal or an interference (e.g., to below an acceptable threshold level), such as without completely eliminating the interference.

Nulling function 215 can include the functionality to measure interference from a particular AP 106 from various receive vectors or directions with respect to the STA 102. Direction can include any path or course along which the transmission signal is moving, oriented, or pointing (e.g., as a vector), and can be specified by its position relative to a reference point or object, such as an AP and/or STA. Nulling function 215 can identify or use measured signals (e.g., sounding signals) from multiple angles, directions or vectors and identify the angle, direction or vector from, along or at which the interference is the lowest or below an acceptable threshold. Nulling function 215 can include or utilize a precoder, such as residing within coordinator 205, to determine the direction or angle along which the interference is lowest or reduced below a threshold (e.g., partial rank nulling). Nulling function 215 can then select the direction, angle or vector corresponding to the lowest interference as the direction at which the signal from that AP 106 is to be partially nulled.

APS 106 and stations 102 can include antennas 220. Antennas 220 can include any transmission or receive antennas. Antennas 220 can include, or be coupled with, communication chains and/or transceivers implementing the communication, including chains of circuitry (e.g., amplifiers, filters, analog to digital and/or digital to analog converters, processors, signal combiners and other circuitry to facilitate signal transmission or receipt.

APs 106 and stations 102 can communication spatial streams 240 (e.g., spatial streams M of an AP 106 intended for a particular STA 102, or a total number of spatial streams N transmitted by an AP 106). Spatial stream 240 can include any data stream transmitted or received through a separate antenna in a MIMO wireless communication system. For instance, a spatial stream can be transmitted or received on more than one antenna, and multiple spatial streams may share the same set of antennas. For example, each spatial stream when transmitted over multiple antennas can use a unique beamforming vector, which can be different from the vectors used for other spatial streams transmitted over the same set of antennas. Spatial streams 240 can provide or facilitate improved throughput and reliability by using multiple antennas to create distinct data paths. Spatial streams 240 can be suitable for directional control and transmissions with partial-rank nulling.

System 200 can include or use any number of spatial streams 240, including any independent data streams transmitted simultaneously over multiple antennas in a MIMO (Multiple-Input Multiple-Output) system. System 200 can include STAs 102 that can be configured for communicating a wireless network (e.g., WLAN of a BSS 250) to receive and transmit data. System 200 can allow a STA 102 to receive multiple spatial streams 240 simultaneously via one or more receive antennas 220 (e.g., two receive antennas for each STA 102). Each spatial stream 240 can represent an independent data stream transmitted from an AP 106 that can minimize the interference in a number of dimensions/directions. The number of dimensions or directions in which the partial-rank nulling can reduce the interference can be smaller than the number of spatial streams 240 that a STA 102 can receive. For example, if a STA has two receive antennas 220 (e.g., can receive signals in two dimensions or directions), partial-rank nulling can minimize interference along one dimension or direction as seen by the STA 102.

The number of spatial streams 240 that a STA 102 can support can vary based on the capabilities and the MIMO configuration of the network. For example, if a STA 102 has multiple receive antennas 220 and the network is configured for 2x2 MIMO, then STA 102 can receive two spatial streams 240 simultaneously. Each spatial stream 240 can carry independent data, effectively increasing the data capacity and improving the overall throughput, data rates, increased system capacity, and/or wireless network reliability.

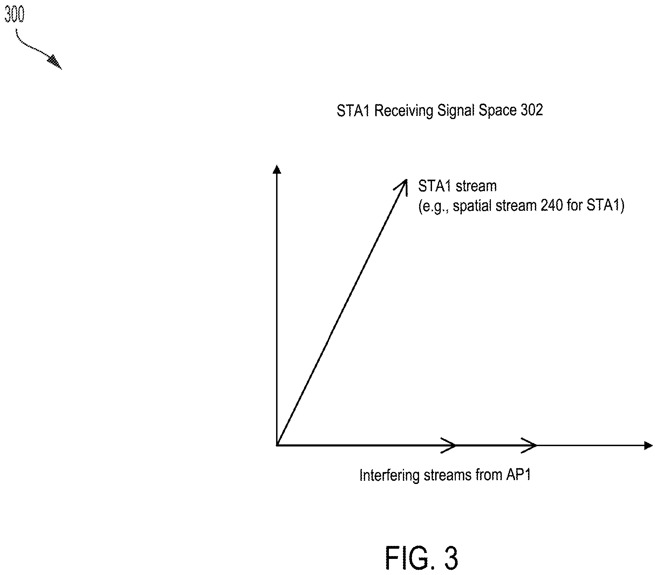

Referring now to FIG. 3, an example of a plot 300 of a signal-space 302 for received transmissions by a STA 102 in an aspect of the technical solution. As shown in plot 300, station 102 (e.g., STA1) having a total of K=2 receive antennas 220 can receive a total number of N=3 spatial data streams 240 transmitted by an AP 106 (AP1). STA1 can be within the BSS 250 of the transmitting AP1 106 and can receive all of 3 spatial data streams 240 transmitted by AP1, even though only one of those spatial data streams 240 are intended for STA1.

For example, AP1 can transmit N=3 spatial streams 240 via a down link (DL) MU-MIMO to multiple STAs 102 within its BSS 250. Of the N=3 total spatial data streams 240 transmitted by AP1, M=1 streams (e.g., a single spatial data stream 240, where M<N) can be intended for STA1. While plot 300 shows STA1 stream (e.g., the stream intended for STA1) directed at an angle away from the X axis, the remaining two spatial data streams 240 (e.g., interfering streams from AP1) are directed along the X-axis. The Y-axis (which is orthogonal or perpendicular to the X-axis) can represent the direction or vector on the signal space 302 of the STA1 along which transmissions are nulled or partially nulled. Accordingly, STA1 stream (being directed at least partially along the Y-axis) can have an interference below a threshold in at least one direction and can therefore be received by the STA1. For example, STA1 stream can be free from interference at least in one direction.

In the example of FIG. 3, receiving station 102, such as the STA1, can have any number of K receive-antennas 220, such that M < K < N, where M corresponds to a total number of data streams intended for the receiving station 102 and N corresponds to a total number of data streams transmitted by the AP 106 to any number of recipients. In plot 300 example, N = 3, M = 1 and K = 2. In such a scenario, for STA1 102 to be able to decode its own M intended spatial-streams 240, AP1 106 can beamform the transmitted spatial-streams such that the signal strength from the interfering streams (e.g., N-M=2 streams aligned with the X-axis) have their signals at the STA1 minimized over a set of M linearly-independent directions as received at STA1 102. M intended streams 240 can be recovered by STA1 102 by projecting them away from the X-axis, as shown by STA1 stream.

AP1 106 can include appropriately constructed long-training fields (LTFs) in its transmissions so that STA1 102 can estimate both i) the directions of its M intended streams, as well as (ii) the M distinct directions in which the interference is minimized. The technical solution can include or provide a framework for a scenario in which any number of APs 106 performing partial-rank nulling towards any number of STAs 102. For instance, when two APs 106 are utilized, prior to implementing coordinated-transmissions, a first AP 106 (e.g., AP1) and a second AP 106 (e.g., AP2) can execute a coordination (e.g., during a coordination phase) in which messages can be exchanged between AP1 and AP2 to identify each receiving STA for which the interference is to be fully or partially nulled. For example, the APs 106 can identify a STA 102 with more receive antennas than its intended spatial streams (e.g., antennas K=2, while received streams N = 10, of which only M=1 is intended for the STA).

Such identified STA can include an interference seen from the OBSS AP to be significant enough to include nulling (e.g., STA can have interference signal strength or power that is above a particular threshold). For example, the threshold can include a level of the background signal noise, or a factor of 2, 3, 4, 5, 10 or more of the level of the background noise. The threshold can be, for example, defined in reference to other signals, such as signal strengths, amplitude or power of received intended streams (e.g., 1/2, 1/3, 1/4, or 1/8 of the intended received spatial stream's signal strength, amplitude or power).

For each STA that is identified to have its interfering streams be partially nulled, the AP1 and AP2 can identify a set of linearly independent receive-directions in which the interference from both APs is to be minimized. Linearly independent receive directions can include distinct and non-correlated paths, directions or channels through which signals can be received by multiple receive antennas 220. AP1 and AP2 can change such a set of directions dynamically from one coordinated transmission to the next depending on: i) other receiving STAs, as well as ii) the number of spatial streams intended for each STA.

Once the set of directions are identified, the AP1 and AP2 can commence coordinated transmission that is synchronized in both time and frequency. For instance, out of a total number N1 spatial streams transmitted from AP1, a subset of M1 spatial streams can be intended for STA1 having a K1 number of receive-antennas. The configuration can include M1 spatial streams intended for STA1 that is less than the number of K1 receive-antennas and which are also less than the total number of N1 spatial streams from the AP1 (e.g., M1 < K1 < N1). Likewise, of the N2 streams transmitted from AP2, M2 streams can be intended to STA2 having K2 receive-antennas can be such that M2 < K2 < N2. In such a configuration, both STA1 and STA2 can be selected, determined or configured to have partial-rank nulling implemented upon them by the AP1 or AP2. AP1 or AP2 can coordinate their data stream transitions in time and frequency, using beamforming to directions at which partial-rank nulling is to be performed to reduce interference and allow simultaneous transmissions.

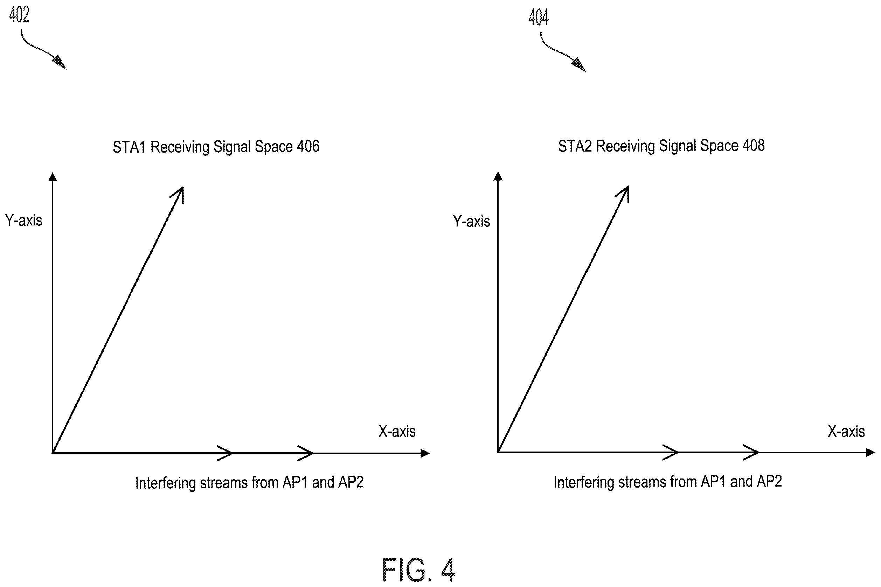

Referring now to FIG. 4, example plots 402 and 404 are illustrated of receiving signal spaces 406 of STA1 and 408 of STA2 which are recipients of transmissions by AP1 and AP2 implementing coordinated partial-rank nulling in a multi-AP transmission example. FIG. 4 can correspond to an instance in which the present technical solutions utilize two APs 106, such as those illustrated in FIG. 2. APs 106 can apply appropriate beamforming vectors to their respective spatial streams 240 to transmit streams at least along the specified directions or vectors as received by the intended STAs, such that the same streams will be partially or fully nulled along the specified directions at the unintended receiving STAs. For example, the beamforming vectors applied to spatial streams can be such that the interference from both AP1 and AP2 is minimized over a set of M1 independent receive-directions at STA1 as pre-agreed during the coordination phase. The M1 intended streams for STA1 can be recovered by projecting the streams in such determined M1 directions. For example, the same can be applied for STA2, with a corresponding set of M2 directions for the STA2. The AP1 and AP2 can include appropriately constructed long-training fields (LTFs) in the coordinated-transmission so that STA1, STA2 can estimate both i) the directions of their respective intended streams, as well as (ii) the directions in which the interference from AP1 and AP2 is minimized.

AP1 and AP2 can each transmit a total number of N = 2 spatial streams 240 of which only M = 1 spatial stream 240 is intended for receipt by the STA 102 of the respective transmitting AP 106's own BSS 250, where each receiving STA 102 includes K =2 receiving antennas 220. For example, for STA1, the remaining one spatial stream from AP1 and both spatial streams from AP2 can produce interference to be partially nulled. As illustrated, a total of 3 spatial streams are partially nulled (e.g., aligned with X-axis or X direction in FIG. 4).

As shown in plot 402, interfering streams 412 from AP1 and 414 and 416 from AP2 are directed along the X direction of STA1 receiving signal space 406, and are eliminated or minimized along the Y direction, while intended stream 410 of AP1 is directed along a different direction (e.g., closer to, or more closely aligned with, the Y direction) and therefore is not eliminated or minimized along the Y-axis or Y direction and received by STA1. For example, Y-axis, also referred to Y direction, can be orthogonal or perpendicular to the X-axis, also referred to as X direction. For example, STA1 receiving signal space allows for intended spatial streams to be received at STA1 when such streams have a component in Y direction that is greater than a threshold. For example, the threshold can up to 5% of the total received signal strength of the intended spatial stream. For example, the threshold can be up to 5%, 10%, 15%, 20%, 30% or greater than 30%, depending on the design.

Similarly, as shown in plot 404, interfering streams 410 and 412 from AP1 and 416 from AP2 are directed along the X direction of STA2 receiving signal space 408, and their signals are also minimized or eliminated along the Y direction, while intended stream 414 from AP2 is directed along a different direction (e.g., closer to, or more closely aligned with, the Y-axis) and therefore is not eliminated or minimized along the Y direction, and received by the STA2. In some implementations, AP1 and AP2 can transmit streams 410, 412, 414 and 416 simultaneously in the presence and range of STA1 and STA2 and interferences and non-interferences of the streams can occur at the same time. Accordingly, the AP1 and AP2 can simultaneously and in a coordinated fashion (e.g., at the same time and frequency) transmit spatial streams to their own respective STAs 102, using partial-rank nulling to prevent interferences to non-intended STAs 102.

In one example, as a part of the coordination phase, the APs 106 (e.g., AP1 and AP2) can exchange information on the precoder-algorithm to be used in computing the beamforming vectors for each STA 102 (e.g., STA1 and STA2) to achieve partial-rank nulling. For example, as a part of the coordination phase, the APs 106 can exchange information, data or description of the direction-vectors in which interference is to be minimized at each STA's receiving antennas 220. For example, as a part of the coordination phase, a single AP 106 can compute the beamforming vectors for all the spatial streams and shares these with the other participating APs.

Using the information exchanged in the coordination phase, the receive-directions in which to minimize interference for each STA 102 can be determined or generated based on, or using, policies, such as policies specified in the standard. The choice of the policy can be fixed as a "default" implementation or can be decided based on the capabilities of the APs 106 and/or the STAs 102. For example, a policy can include for a STA receiving M intended spatial-streams from the AP 106 of its own BSS 250, an interfering AP 106 minimizing interference along the M directions at that STA's receiver corresponding to the M strongest eigen-modes of the channel between the STA 102 and its AP 106 (e.g., AP 106 of STA's own BSS 250). For example, a policy can include, for a STA receiving M intended spatial-streams from the AP of STA's own BSS, an interfering AP 106 minimizing interference along the M directions at that STA's receiver that correspond to the M strongest eigen-modes of the channel between the STA 102 and the interfering AP 106.

For example, as a part of the coordination phase, AP1 and AP2 can each perform channel-sounding to STA1 and STA2. Each STA 102 can measure the MIMO channel from each sounding AP 106 and can provide a response including the measurements. The relative phase-offsets across receive antennas for a STA 102 can be maintained at constant values when measuring channels from different APs.

During the coordination phase, different independent variants and their combinations can be implemented. For example, a STA 102 can feed back estimates of the MIMO channel from a sounding AP in a compressed-beamforming report format (CBR), such as the one defined in 802.11. For example, a STA 102 can feed back estimates of the MIMO channel from a sounding AP in Cartesian-form. For example, for an AP 106 from another BSS 250 than the BSS 250 of the STA, (e.g., an interfering AP), STA 102 can feed back a linear transformation of the MIMO channel from that AP 106. The linear transformation can be determined by the previously measured MIMO channel between the STA and its self-BSS AP. For example, linear-transformations could represent projection onto one or more eigen-modes of the MIMO channel measured between the STA 102 and its self-BSS AP 106. For example, for a sounding AP 106, a STA 102 can feed back the preferred set of M directions in which the corresponding AP can minimize interference if the STA 102 is receiving M intended spatial streams from its self-BSS AP 106.

As part of the coordination phase, the APs 106 (e.g., AP1 and AP2) can jointly perform channel-sounding to STAs 102. APs 106 can jointly transmit a null-data-packet (NDP) which can be synchronized in time/frequency. The total number of sounding dimensions in the NDP can equal to the total number of antennas 220 across the APs 106. The jointly transmitted NDP can be preceded by one or more NDP announcement (NDPA) frames. For example, a single AP 106 can transmit an NDPA on behalf of all the APs, to STAs across BSS 250 that are to be sounded. For example, all the APs 106 cam transmit their NDPAs sequentially, with each AP's NDPA addressing the STAs 102 within their own BSS 250. For example, all APs 106 can transmit their NDPAs at the same time, but separated in frequency (e.g., via OFDMA), with each AP 106 addressing the STAs 102 within their own respective BSSs 250. The coordinated transmission can be preceded by a trigger frame transmitted by one of the APs 106. Based on the trigger frame, all the participating APs 106 can synchronize their carrier-frequency offsets (CFO) relative to the AP 106 that transmitted the trigger frame and synchronize the start-time of their coordinated transmissions.

In one aspect, system 200 can be a system for coordinated partial-rank nulling in multi AP transmissions or a system for simultaneous multi-AP transmissions with coordinated partial-rank nulling. System 200 can include any number of APs 106 that can have overlapping BSSs 250 and overlapping ranges 255 for wireless communications. For example, a first AP 106 can have a first set of (e.g., one or more) STAs 102 within a first BSS 250 (e.g., WLAN) of the first AP 106 and a second AP 106 can have a second set of STAs 102 (e.g., one or more STAs) within a second BSS 250. Each one of the first AP 106 and the second AP 106 can include one or more STAs 102 of the other BSS 250 (e.g., neighboring AP 106) within its own range 255 for wireless communication.

A first AP 106 can be configured to transmit, to a second AP 106, a first message. The first message can be transmitted by the coordinator 205 as a part of the coordination phase in which APs 106 either jointly gather information from STAs 102 belonging to either of their BSS, or individually gather information from STAs 102 in their own BSS 250 and exchange gathered information between APs 106. The first message can identify a first station 102 of the first AP 106 for which interference from the second AP 106 is to be partially nulled. The first station 102 can be a STA that is a part of the first BSS 250 of the first AP 106 (e.g., configured for wireless communication with the first AP 106 via a WLAN of the first AP 106).

The message can include a first direction in which the interference from the second AP 106 is partially nulled at the first station 102. For instance, the first message can include a quantity of a first set of directions in which interference from second AP at first station is to be partially or fully nulled. For example, the first message can include a first set of directions in which interference is to be partially or fully nulled. For example, the first message can cause the second AP to identify a first set of directions in which interference to the first station is to be partially or fully nulled.

The first direction or set of directions can be a set of one or more linearly independent vectors or directions along which transmissions from the second AP 106 can be reduced below a predetermined threshold (e.g., a threshold corresponding to a power or gain level of the signal or defined in accordance with a noise signal level). The first message can include location information (e.g., location of the STA with respect to the AP 106, coordinates of the STA with respect to AP 106, information on the or any other information corresponding to spatial orientation of the STA).

First AP 106 can receive, from the second AP 106, a second message. The second message can be transmitted by the coordinator 205 during the coordination phase of the first and second APs 106. The second message can identify a second station of the second AP for which interference from the first AP is to be partially nulled or fully nulled. The second message can include or identify a second direction in which the interference from the first AP is partially nulled or fully nulled at the second station 102. The second direction or set of directions can be a linearly independent vector or direction along which transmissions from the first AP 106 can be reduced below a predetermined threshold (e.g., a threshold corresponding to a power or gain level of the signal or defined in accordance with a noise signal level). The second message can include location information (e.g., location of the STA with respect to the AP 106, coordinates of the STA with respect to AP 106, information on the or any other information corresponding to spatial orientation of the STA).

First AP 106 can establish, set up, modify or configure one or more settings of the first AP 106. The one or more settings can be settings to establish or coordinate with the second AP 106 a time and a frequency of a transmission to the first station 102. The transmission can be a message, a request, a response to a request or a network data packet, such as a packet of a spatial data stream 240. The time can be a time at which the first AP 106 is to transmit the transmission to the first station 102. The time can be synchronized to be the same time as a transmission from the second AP 106 to a second station 102. The time can be synchronized to be different than the time at which the second AP 106 transmits the second transmission to the second station 102. The one or more settings can be for the first AP 106 to send or transmit the transmission to the second station 102 according to the second direction to partially or fully null the interference at the second station 102.

The first message can identify at least a first station 102 of the first AP 106 for which interference from the second AP 106 is to be nulled. The first message can identify at least a quantity of directions in which the interference is to be partially nulled at the first station. The first message can identify the directions in which the interference is to be partially nulled at the first station 102. first AP to the second station). Also, the receipt of the first message can cause the second AP to identify a set of directions along which the interference to the first station is to be partially nulled.

For example, the direction for partially nulling interference at a particular station can depend on which other stations 102 are receiving the signal at the same time since the beamforming vectors can be computed for the totality of all receiving stations 102, and not just individual stations in isolation. In such examples, while a message may identify the station 102 at which interference is to be nulled, it may or may not identify a fixed constant direction for interference-nulling for that particular station 102. For example, in some implementations the direction for nulling may not be indicated or signaled by either AP, but instead each AP can independently determine or infer the directions for nulling for different stations 102 based upon exchanging other information, such as the set of stations 102 with which each AP 106 intends to communicate, the number of directions in which interference is to be nulled at each station, directions or locations of stations or APs and similar. Such information taken together with information gathered about channels between the APs 106 and STAs 102 that was acquired by a prior channel sounding process, can be used to determine directions for nulling for each stations 102 independently.

First AP 106 can be configured to transmit, to the first station 102 at the time and the frequency of the setting, a first spatial stream 240 of data comprising the transmission. The first spatial stream 240 can be oriented so as to partially null the interference from the first AP at the second station along the second set of directions. For example, first AP 106 can beamform the first spatial stream 240 (e.g., including the transmission) to be transmitted along the spatial vector or direction orthogonal to the first direction at the second station 102. The first stream of data can be coordinated with a second stream of data transmitted by the second AP 106 to the second client 102 at the time and frequency (e.g., the coordinated time and frequency) with the second stream oriented to partially or fully null the interference from the second AP at the first station 102 along the first set of directions. For instance, the first stream of data can be coordinated with a second stream of data transmitted by the second AP to the second station at the time and frequency, with the second stream of data oriented to partially null the interference from the second AP at the first station along the first direction.

The first station 102 can be configured to receive wireless transmissions from the first AP via the wireless local area network (WLAN) of the first AP. The second station 102 can be configured to receive wireless transmissions from the second AP via the WLAN of the second AP. The first station 102 and the second station 102 can each be located within a first range 255 of the wireless transmissions from the first AP 106 and a second range 255 of the wireless transmissions from the second AP 106.

First AP 106 can be configured to determine, based at least on the second set of one or more directions, a spatial orientation of one or more antennas 220 of the first AP 106. The spatial orientation of the one or more antennas 220 of the first AP 106 can be determined based at least on the locations (e.g., coordinates or GPS locations) of the first station, the second station and/or the first AP 106. First AP 106 can be configured to beamform the transmission with respect to the first station 102 based at least on the spatial orientation of the one or more antennas 220 of the first AP 106.

First AP 106 can be configured to exchange, with the second AP 106, the time and the frequency for coordinating transmissions of the first AP with transmissions of the second AP. For example, coordinators 205 can exchange channel or bands at which to transmit communications to their STAs 102 as well as the timing and frequency of the transmissions and/or the phase of the transmissions with respect to each other. First AP 106 can be configured to coordinate transmissions to the first station 102 by the first AP 106 with transmissions to the second station by the second AP using the time and the frequency.

First AP 106 can be configured to receive a packet comprising information on the first client. The packet can include a network packet, a message or a transmission that can include information on the characteristics of the channels of the first station and/or the second station. First AP 106 can be configured to identify, from the received packet, information indicative of a spatial orientation of the first client with respect to the second AP. For example, the first AP 106 can determine linearly independent vectors at the STA 102 at which interferences at the STA 102 are partially or fully nulled. First AP 106 can be configured to determine the first set of one or more directions of the first client using the spatial orientation.

First AP 106 can be configured to receive, from the second AP 106, a third message. The third message can identify a third station 102 of the second AP 106 (e.g., STA 102 within the BSS 250 of the second AP 106) for which interference from the first AP 106 is to be partially or fully nulled. The third message can include a fourth direction to partially null the interference at the first station and along the third direction. First AP 106 can configure the one or more settings of the first AP 106 to coordinate with the second AP 106 the time and the frequency of the transmission to the first station to be sent according to the third set of one or more directions to partially null the interference at the third station. First AP 106 can form a beam for the transmission to the first station according to the second set of one or more directions to partially null the interference at the second station and according to the third set of one or more directions to partially null the interference at the third station.

First AP 106 can be configured to transmit, to the first station 102, a plurality of streams 240 comprising the transmission. The number of the streams 240 in the plurality of streams to be transmitted to the first station 102 may not exceed a number of antennas of the first station 102. The first AP can transmit, to a plurality of STAs comprising the first STA, a second plurality of streams comprising the plurality of streams. For example, a receiving STA 102 can have a number of receive antennas 220 that is not less than the number of spatial streams 240 directed to the receiving STA 102, while the receiving STA 102 can be exposed to a number of spatial streams 240 directed to all STAs within the range 255 of the AP 106 and therefore have interferences from more than the number of spatial streams 240 directed to the recipient STA 102.

### C. Systems and Methods for Downlink (DL) Channel-Sounding with Multiple Access Points

The present disclosure is directed to candidate multi-access point technologies to acquire additional channel-state information to facilitate improved coordinated beamforming between overlapping APs. In multi-AP configurations, when establishing CBF functionality, APs belonging to different BSSes can benefit from obtaining cross-BSS DL channel-state information (CSI). The technical solutions of the present disclosure provide various sounding procedures and frame sequences to acquire or exchange such CSI, including via joint-sounding, individual-sounding, and implicit-sounding techniques. Joint-sounding techniques can include STAs providing, acquiring, or receiving feedback on the composite channel from both APs simultaneously. In individual-sounding, STAs can transmit, acquire, or exchange separate feedback reports for the individual channels measured from each AP. Implicit-sounding techniques can include uplink channel measurements (STA-to-AP) with null data packet (NDP) frames to infer the downlink channel (AP-to-STA) considering radio path differences. Each of these sounding options can vary based on individual configurations and can be implemented within one or more TXOP (transmission opportunities) with SIFS (short inter-frame spacings) to facilitate a more efficient transmission.

The technical solutions can utilize one or more systems and methods for different implementations, configurations, or instances for DL channel-sounding with multiple access points. Any of the systems described in Sections A and B can be configured, constructed, or implemented to implement, operate, and/or use any of the options and techniques described in the present disclosure.

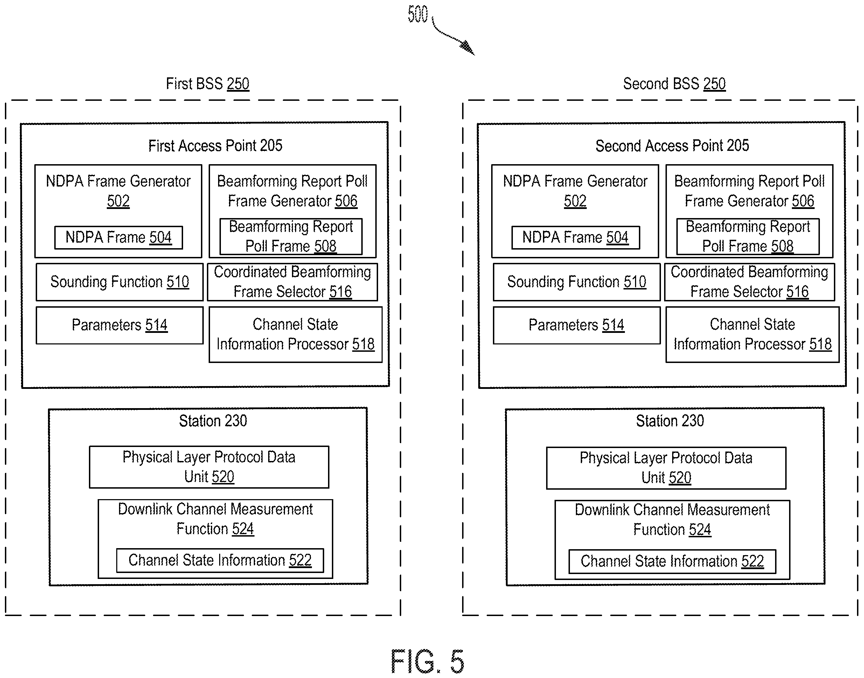

FIG. 5 illustrates an example system 500 for downlink channel sounding with multiple access points. Example system 500 can include one or more basic service sets (BSS) 250. Each BSS 250 can include one or more access points (APs) 205 and one or more stations (STAs) 230. Each AP 205 can include one or more null-data packet announcement (NDPA) frame generators 502, one or more beamforming report poll (BFRP) frame generators 506 for generating beamforming report poll (BFRP) frames 508, one or more sounding functions 510, one or more parameters 514, one or more coordinated beamforming frame selectors 516, and one or more channel state information (CSI) processors 518. The NDPA frame generator 502 can generate or include one or more NDPA frames 504. The BFRP frame generator 506 can generate or include one or more beamforming report poll (BFRP) frames 508. Each STA 230 can include one or more physical layer protocol data units (PDU) 520 and one or more downlink channel measurement functions 524. The PDU 520 can include one or more channel state information 522. The first access point 205 and the second access point 205 in FIG. 5 are similar in functionality to the first access point 205 and the second access point 205 in FIG. 2. The STA 230 in FIG. 5 is similar in functionality to the STA 230 in FIG. 2.

The NDPA frame generator 502 can include any combination of hardware and software for generating Null-Data Packet Announcement (NDPA) frames 504. Depending on implementations, the NDPA frames 504 can include, correspond to, or refer to different variations, such as, NDPA, the null-data packet (NDP), or the implicit-NDPA. The NDPA frame 504 can include signaling frames used to initiate and coordinate downlink channel sounding. The NDPA frame generator 502 can include, use or access sounding information, such as parameters and configuration settings that define the characteristics of the NDPA frames 504. The parameters or configuration settings can include a type of sounding process, sounding sequence information, STA information fields with identifiers of the targeted STAs, specifications for the type of feedback requested from each STA (e.g., CSI report format), a type of CSI requested or information on beamforming configuration, timing, duration, and other parameters for coordinated transmission across multiple APs. The NDPA frame generator 502 can interact with other components within the AP 205 to facilitate the transmission of the generated NDPA frames 504 at designated points during the downlink channel sounding process.

The NDPA frame generator 502 can be configured to transmit the NDPA frame 504 to trigger a sounding process for the set of STAs 230. The NDPA frame 504 can include a STA-information field with an association identifier (AID) value to identify the target STAs 230. The station information field can include a structured data element within a communication protocol. For instance, the station information field can function as a container for information pertaining to a specific wireless station (STA) within a network. The contents of the station information field can vary depending on the specific protocol and its implementation. The AID can include an identifier assigned to a wireless station (STA) during its association process in a network. The AID value can be used by the second AP 205 to identify the STAs 230 that desire to participate in the sounding process.

The NDPA frame generator 502 can be configured to transmit the NDPA frame 504 to the set of STAs 230 within a specific BSS 250 of the second AP 205. The NDPA frame 504 can include any information or data for indicating or announcing a sounding sequence or providing data for a sounding sequence. The NDPA frame 504 can include a field to signal to a first AP 205 to prepare for transmission of the NDPA frame 504. For example, the signal to prepare for transmission can provide information about the upcoming transmission, which the receiver can use to configure one or more settings for performing the functionality associated with the upcoming transmission. The field can include the AID having a predetermined value to trigger the first AP 205 to prepare the NDPA frame 504. The NDPA frame 504 can be configured to indicate a desired CSI format to the STAs 230 and signal the first AP 205 to prepare for the NDP transmission. The preamble of the NDPA frame 504 transmitted by the first AP 205, in response to the NDPA frame 504, can signal a BSS color corresponding to the BSS 250 of the second AP 205. The NDPA frame 504 can include parameters, including identifiers of the targeted STAs 230 and specifications for the type of CSI feedback solicited from each STA 230 (e.g., format, spatial resolution, etc.), The NDPA frame 504 and any BFRP frames used in the option can include the MAC addresses and AIDs corresponding to the target STAs 230. The first and second APs 205 can exchange communication to determine the type or a format of the CSI 522 which then can be used or gathered on the DL channel, such as via a feedback mechanism. The CSI 522 can be communicated by the STAs 230 when reporting via feedback messages.

The NDPA frame generator 502 can be configured to transmit the implicit NDPA frame 504 to solicit an uplink triggered NDP (T-NDP) frame from the set of STAs 230. The NDPA frame 504 can include the field to signal to a second AP 205 to prepare for receiving the T-NDP frame. The NDPA frame 504 can identify parameters for the transmission of the T-NDP frame. The NDPA frame 504 can include parameters for the T-NDP frame, such as bandwidth, LTF configuration, guard interval, spatial streams, or RU allocation.

The BFRP frame generator 506 can include any combination of hardware and software for generating the BFRP frames 508. The BFRP frame 508 can include frames requesting CSI feedback from STAs 230 during downlink channel sounding. The BFRP frame generator 506 can access information and parameters that define the content of the BFRP frames 508. For instance, the parameters can include identifiers of the targeted STAs 230 and configuration settings for how the STAs 230 should respond to the BFRP with their CSI feedback (e.g., modulation coding scheme, resource unit allocation, etc.), and other one or more parameters related to triggering the coordinated transmission of BFRPs across multiple APs 205. The BFRP frame generator 506 can interact with other components within the AP 205 to facilitate the transmission of the generated BFRP frame 508, for example, by transferring the BFRP frames 508 to the appropriate modules for transmission. The BFRP frame generator 506 can be configured to generate the BFRP frame 508 to solicit CSI feedback from the STAs 230. The composite channel can be or include a form of CSI feedback estimated by the STAs 230, for example in the joint sounding sequences.

The BFRP frame generator 506 can be configured to generate one or more BFRP frames 508 for the DL channel measurement from the STAs 230 to the first AP 205. The BFRP frames 508 can include parameters specifying the type of CSI feedback solicited from the STAs 230. The STAs 230 can transmit trigger based PDUs with CSI 522 based on the parameters, including a compressed beamforming report (CBR). The first and second APs 205 can exchange communication to determine the CSI type. The BFRP frames 508 generated for individual sounding can include information related to the second AP 205, such as an identifier or a reference to facilitate the sounding process.

The sounding function 510 can include any combination of hardware and software components for managing the downlink channel sounding process. The sounding function 510 can initiate the sounding process at designated points in time, for example, based on triggers received from the NDPA frame generator 502. The sounding function 510 can define the specific sounding techniques to be used. The sounding techniques can include selecting sounding sequences, adjusting parameters for signals used in sounding, and coordinating sounding techniques across multiple APs 205.

The sounding function 510 can be configured to coordinate with one or more APs 205 to synchronize the timing and parameters of the sounding process to provide the correct measurement of the composite channel by the STAs 230 in both sets. The second AP 205 can identify a STA 230 in the first set associated with the first AP 205 to participate in CBF and request CSI for CBF.

Channels can include or refer to the downlink communication channels between the APs 205 and the STAs 230. The channels can represent the physical paths that the sounding signals travel from the APs to the STAs. During the sounding process, the APs 205 can transmit sounding signals (e.g., signals, reference signals, etc.) via the channels. The data from these signals can be stored on STAs 230 or APs 205. The signals can be configured to probe the channel characteristics and cause the STAs 230 to gather information about the channel response. Based on the received sounding signals, the STAs 203 can estimate the CSI that indicates the strength of the channel, including factors such as signal strength, attenuation, and phase shifts across different subcarriers or spatial streams.

The parameters 514 can include configurations that define how STAs 230 respond to BFRP frames 508 transmitted by the AP 205. The parameters 514 can dictate how the STAs 230 may format and transmit their CSI feedback. The parameters 514 can include modulation and coding scheme (MCS), spatial stream allocation, and resource unit (RU) allocation. The MCS parameter can define the modulation techniques and/or error correction coding schemes that can be used by the STAs 230 for transmitting their CSI feedback. The spatial stream allocation parameter can indicate how many spatial streams (independent data streams) the STAs 230 can use when transmitting their CSI feedback. The RU allocation parameter can specify the specific RUs within the overall wireless channel that the STAs 230 can use for transmitting their CSI feedback.

The coordinated BFRP frame selector 516 can include any combination of hardware and software components for selecting the BFRP frames 508 based on the sounding process. The coordinated BFRP frame selector 516 can access information about the sounding process, such as whether the sounding uses coordinated transmission across multiple APs 205 or the capabilities of the targeted STAs 230, among others. Based on the aforementioned information, the coordinated BFRP frame selector 516 can select the BFRP frame 508 to be transmitted for the sounding process. The coordinated BFRP frame selector 516 can interact with other components within the AP 205 to receive the BFRP frames 508 for selection. The coordinated BFRP frame selector 516 can select a single BFRP frame 508 if the sounding process does not use coordinated transmissions. The coordinated BFRP frame selector 516 can modify multiple BFRP frames 508 for coordinated transmission across multiple APs 205.

The CSI processor 518 can include any combination of hardware and software components for processing the CSI feedback received from STAs 230 during the downlink channel sounding process. The CSI processor 518 can receive the CSI feedback reports transmitted by the STAs 230 in response to BFRP frames 508 sent by the AP 205. The CSI 522 can be encoded within the feedback reports using specific formats (e.g., compressed beamforming report (CBR)). The CSI processor 518 can decode the CSI 522 to extract the relevant channel state details. In the case of multiple APs 205, the CSI processor 518 can receive feedback reports from STAs 230 that have been probed by multiple APs 205. The CSI processor 518 can extract features from the CSI data 522 that are relevant for different applications. The features can include signal strength across different subcarriers or spatial streams, path loss estimates, delay spread characteristics, and doppler shift information, among others.

The PDU 520 can refer to a data unit that is exchanged between network layers within a communication protocol stack. The PDU 520 can include a header and a payload. The header of the PDU 520 can include control information for physical layer processing, such as synchronization codes, MCS indicators, and identifiers for receiving STA 230. The payload of the PDU 520 can include CSI data 522. The PDU 520, including the CSI data 522, can be transmitted by the STAs 230 over the wireless channel back to the AP 205. The PDU 520 can be a trigger based PPDU transmitted by each STA 230. The trigger based PPDU can provide the CSI 522, including several parameters, such as a beamforming report, a beamforming matrix index, a signal-to-noise ratio, or a metric of the performance of a modulation scheme.

The DL channel measurement function 524 can include any combination of hardware and software components for extracting information about the DL channel characteristics based on the sounding signals transmitted by the AP 205. The DL channel measurement function 524 can receive the sounding signals transmitted by the AP 205 through the DL channel. The sounding signals can include pilot signals, reference signals, or specific waveforms configured for channel probing. The DL channel measurement function 524 can perform signal processing tasks such as filtering, synchronization, and channel estimation. The DL channel measurement function 524 can generate CSI data 522 specifying the DL channel condition between the AP 205 and the associated STA 230. In this regard, the CSI data 522 can refer to information about the downlink channel conditions between the AP 205 and the STA 230. The specific format and content of the CSI 522 may depend on the sounding process and the capabilities of the wireless protocol. The first and second APs 205 can exchange parameters for alignment (e.g., carrier frequency offset (CFO) and sampling frequency offset (SFO)).

The example system 500 for downlink channel sounding with multiple APs 205 can implement joint, individual or implicit sounding configurations or options. The example system 500 can include the components (e.g., NDPA frame generator 502, sounding function 510, beamforming report frame generator 506, coordinated beamforming frame selector 516 and CSI processor 518) that can be configured to implement multiple phases of sounding options. The phases of some of the sounding options, such as the joint and individual sounding options, can include an announcement phase, a channel-sounding phase and a feedback phase.

The announcement phase can include one or more APs 205 transmitting trigger or NDPA frames to initiate the sounding process. These frames can include data or information to notify STAs 230 or other APs 205 about specific types of sounding sequence and the type of CSI feedback solicited in preparation for the subsequent phases. The channel sounding phase can include one or more APs 205 transmitting a null-data packet (NDP), which can be used by the STAs 230 to estimate the corresponding downlink channels from the APs 205 in order to determine and prepare the CSI feedback. The feedback phase can include one or more APs 205 soliciting CSI feedback from the STAs 230 via BFRP frames and the STAs 230 responding by transmitting the CSI feedback, such as via a trigger-based PPDU. While the present disclosure provides multiple examples or configurations of various joint, individual and implicit sounding options, it is understood that any configurations that mix and match any of the versions of these phases can be used for any other configuration. For instance, an announcement phase operation of one joint sounding option can be used as an announcement phase operation of another j oint sounding option or an announcement phase operation of another individual sounding option, or vice versa. For instance, a channel-sounding phase operation of one joint sounding option can be used as a channel-sounding phase operation of another joint sounding option or a channel-sounding phase operation of another individual sounding option, or vice versa. For instance, a feedback phase operation from one joint sounding option can be used as a feedback phase operation of another joint sounding option or a feedback phase operation of another individual sounding option, or vice versa.

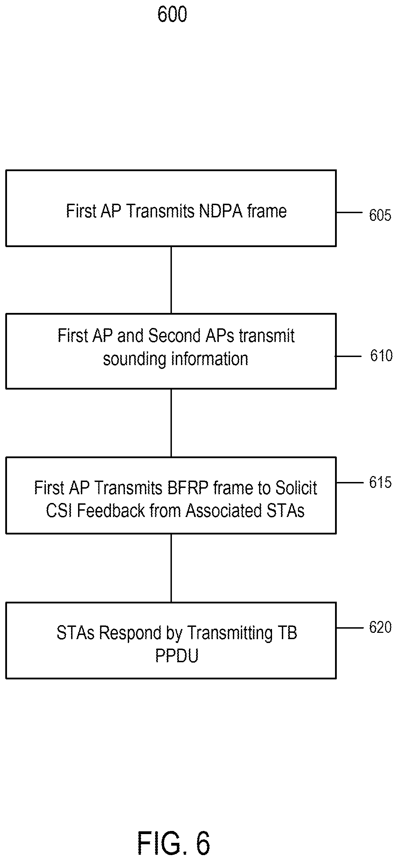

Referring now to FIG. 6 an example method 600 of downlink channel joint-sounding with multiple access points is illustrated. Method 600 can be implemented, using for example, systems 200 and 500 or any of the features discussed in connection with FIGS. 1-5. Method 600 can include acts 605-620. At 605, the method can include transmitting a Null-Data Packet Announcement (NDPA) frame from the first AP to the second AP and one or more STAs. At 610, the method can include the transmission of sounding information by the first AP and second AP. At 615, the method can include transmitting a beamforming report (e.g., BFRP-1) frame from the first AP to solicit CSI feedback based on a composite channel. At 620, the method can include the transmission of a trigger-based (TB) PPDU by STAs in response to the BFRP-1 frame to provide CSI feedback.

At 605, the method can include the first AP transmitting an NDPA frame (e.g., NDPA-1 frame) to trigger a sounding process for the first set of stations associated with the first AP. The NDPA frame can include a station information field with an association identifier (AID) value. The NDPA frame can include the STA-information field with a predefined AID value. The AID value in the STA-information field can be read and identified by the second AP. For instance, in response to receiving the AID value, the second AP can be triggered to participate in the sounding process for the STAs of the second AP (second set) with respect to the first AP. The first AP and/or the second AP can exchange one or more parameters before the sounding process, such as carrier frequency offset (CFO) and sampling frequency offset (SFO), for the alignment of wireless communications.

The NDPA-1 frame can include information addressed to one or more of (e.g., each of) the STAs associated with the first AP. The NDPA-1 frame can include additional information addressed to the STAs, for instance, indicating the type of the sounding process, a type of a channel state information (CSI) requested, information on beamforming configuration, timing, or duration. The NDPA-1 frame can indicate a specific multi-AP sounding sequence being used to distinguish the sequence from single-AP sounding or other multi-AP configurations. The NDPA-1 frame can be transmitted in a non-high throughput (HT) PPDU format, which can represent a type of data transmission format configured to operate at lower maximum speeds and often in narrower frequency bandwidths.

At 610, the method can include the transmission of sounding information by the first AP and second AP. Sounding information can include any information or data that facilitate estimation of channels by the STAs with respect to one or more APs. The first AP and the second AP can coordinate or determine how to transmit sounding information (e.g., sounding NDP transmission) to the STAs of the first AP. For instance, responsive to receiving the NDPA-1 frame, the first AP and the second AP can coordinate transmissions to STAs to make measurements of their DL channels. For instance, the first AP and the second AP can transmit the sounding information to the STAs through a single joint-NDP frame, which can include all the desired information for the STAs to measure the DL channel from both APs. For instance, the first AP and the second AP can transmit the sounding information to the STAs through two sequential NDP frames, with each frame including information for measuring the DL channel from a specific AP. The selection between a joint NDP or sequential NDPs can be determined, by the first AP and the second AP through prior negotiation or signaling mechanisms.

Each STA that is addressed by and receives the NDPA frame at 605 can measure the downlink (DL) channel from one or more APs based on the received sounding information at 610. For instance, the specific channels that a STA measures can depend on the sounding sequence and its association. For example, in a sounding sequence initiated by the first AP, STAs associated with the first AP can measure the channel (e.g., H1) from the first AP and the channel (e.g., H2) from the second AP to form the composite channel (e.g., H). The STAs associated with the second AP may not participate in the sounding sequence, if the sounding sequence was initiated by the first AP. Once the individual channel measurements (H1 and H2) are completed, each STA can form a composite channel referred to as "H" by concatenating the individual channel measurements in a predetermined order. To ensure accurate measurement of the composite channel by the STAs, the first AP can coordinate with the second AP to synchronize the timing and parameters of the sounding process. For example, a STA can uses long training fields in NDPA frames 504, such as NDPs, to estimate channels which can comprise receive signal amplitudes, frequencies or phases of signals, or other information corresponding to antennas at the APs and the STA.

At 615, the method can include transmitting a beamforming report poll (e.g., BFRP-1) frame to solicit CSI feedback. For instance, the method can include the first AP transmitting a BFRP-1 frame to solicit CSI feedback. The BFRP-1 frame can request or solicit CSI feedback from the associated STAs of the first AP based on the composite channel. The BFRP-1 frame can be transmitted in a non-HT PPDU format. For instance, the BFRP-1 frame can indicate transmission parameters for each set of STAs. The transmission parameters can include factors such as modulation and coding scheme (MCS), spatial-stream allocation, and resource unit (RU) allocation of one or more STAs. The transmission parameters can be configured such that the response transmitted by each STA based on these settings can be decoded by the first AP and the second AP.

At 620, the method can include the transmission of a trigger-based (TB) PPDU by STAs. For instance, the STAs addressed by and receiving the BFRP-1 frame can jointly transmit a TB PPDU in response. Within the TB PPDU, each STA can feed back the associated CSI (e.g., compressed beamforming report (CBR)) based on the composite channel. Each STA can transmit the CSI feedback based on the parameters assigned to the STAs in the BFRP-1 frame. In NDPA-1 and BFRP-1 frames transmitted by the first AP, the MAC addresses and AIDs can be the same as the MAC addresses and AIDs used for single-AP sounding by the first AP. The TB PPDU transmitted by each station can provide various CSI elements. For instance, the CSI elements can include a beamforming report, a beamforming matrix index, a signal-to-noise ratio, or a metric of a performance of a modulation scheme. The first AP and the second AP can dynamically adjust beamforming parameters based on the received TB PPDU feedback according to a performance of a downlink channel for each station in the first set of one or more stations of the first AP.

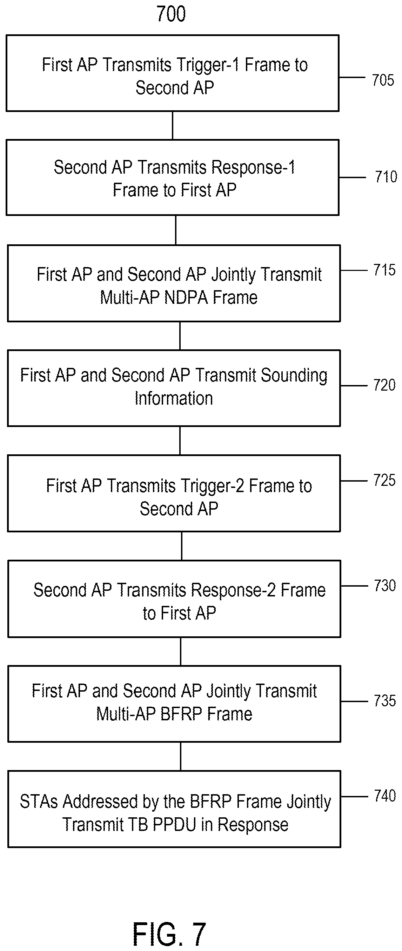

Referring now to FIG. 7 another example method 700 of downlink channel joint-sounding with multiple access points is illustrated. Method 700 can be implemented, using for example, systems 200 and 500 or any of the features discussed in connection with FIGS. 1-5. Method 700 can include acts 705-740. At 705, the method can include transmitting a trigger frame (e.g., trigger-1 frame) from the first AP to the second AP. At 710, the method can include transmitting a response frame (e.g., response-1 frame) from the second AP to the first AP. At 715, the method can include jointly transmitting a multi-AP NDPA frame from the first AP and the second AP. At 720, the method can include transmitting the sounding information from the first AP and the second AP. At 725, the method can include transmitting a trigger frame (e.g., trigger-2 frame) from the first AP to the second AP. At 730, the method can include transmitting a response frame (e.g., response-2 frame) from the second AP to the first AP. At 735, the method can include jointly transmitting a multi-AP BFRP frame from the first AP and the second AP. At 740, the method can include responding with a joint TB PPDU by the STAs addressed in the BFRP frame.

At 705, the method can include transmitting a trigger frame (e.g., trigger-1 frame). For instance, the first AP can transmit the trigger-1 frame to the second AP. The trigger-1 frame can include information about the associated STAs of the first AP for the multi-AP NDPA frame. The information can include details such as AIDs or other identifiers to address specific STAs. The trigger-1 frame can be transmitted in a non-HT PPDU format. The trigger-1 frame can include information about the associated STAs of the first AP that will be relevant for the multi-AP BFRP frame.

At 710, the method can include transmitting a response frame (e.g., response-1 frame) from the second AP to the first AP. For instance, after receiving the trigger-1 frame, the second AP can transmit a response-1 frame back to the first AP. The response-1 frame can include information about the associated STAs of the second AP for the multi-AP NDPA frame. The response-1 frame can be transmitted in a non-HT PPDU format. The response-1 frame can include information about the associated STAs of the second AP relevant for the multi-AP BFRP frame (e.g., if trigger-1 included corresponding information for the first AP's STAs).

At 715, the method can include jointly transmitting a multi-AP NDPA frame from the first AP and the second AP. For example, based on the exchanged information in the trigger-1 frame and the response-1 frame, the first AP and the second AP can jointly transmit a multi-AP NDPA frame, intended for reception by the STAs associated with the first AP and STAs associated with the second AP. The second AP can pre-correct the associated CFO and SFO relative to the first AP, with the information derived from the trigger-1 frame. The second AP can apply a cyclic shift to its transmitted signal compared to the transmitted signal of the first AP to avoid cancellation during reception by the STAs. The APs can transmit the multi-AP NDPA frame with separate preamble from payload. For example, for the multi-AP NDPA frame, both APs can transmit identical preamble contents and identical payload contents for consistency, in order to enable the STAs to decode the contents of the frame correctly. The multi-AP NDPA frame can use multi-AP MAC addresses for the transmitter address (TA) and BSSID fields in the MAC header, different from the TA used by each AP for single-AP NDPA frames. The NDPA frame can use a multi-AP broadcast receive address (RA) distinct from the broadcast RA used by each AP for single-AP NDPA frames.

The special MAC addresses can be recognized or identified by the STAs for whom the NDPA is intended, with STAs maintaining additional MAC addresses for decoding multi-AP NDPA frames. The multi-AP NDPA frames can include STA information fields for the intended STAs associated with the participating APs, with each STA information field addressed to a specific STA using an AID, which may be different from the AID used for addressing the corresponding STA in single-AP NDPA frames. Each STA info field can include information on the type of CSI feedback solicited from the STA to which it is addressed. The multi-AP NDPA frames can indicate the specific multi-AP sounding sequence being used (e.g., to distinguish from single AP and/or other multi-AP sounding sequences). The multi-AP NDPA frames can be transmitted in a non-HT PPDU format.

At 720, the first AP and the second AP can transmit the sounding information. For example, the first AP and the second AP can transmit the sounding information to the STAs through a single joint-NDP frame, which can include the information for the associated STAs to measure the downlink channel from both APs. The first AP and the second AP can transmit the sounding information to the STAs through two sequential NDP frames, with each frame including information for measuring the channel from a specific AP. Based on the sounding process, the STA(s) addressed by the multi-AP NDPA can measure the DL channel, for example, H1 from the first AP and H2 from the second AP. The STA(s) addressed by the multi-AP NDPA can form a composite channel H from H1 and H2. In some implementations, the exact choice may be determined via prior negotiation/signaling.

At 725, the first AP can optionally transmit a trigger frame (e.g., trigger-2 frame) to the second AP. The trigger-2 frame can include information about the associated STAs of the first AP for the BFRP frame. The trigger-2 frame can be transmitted in a non-HT PPDU format.

At 730, the second AP can transmit a corresponding response-2 frame, in response to receiving the trigger-2 frame, to the first AP. The response-2 frame can include information about the associated STAs of the second AP for the BFRP frame. The response-2 frame can be transmitted in a non-HT PPDU format.

At 735, the method can include jointly transmitting a multi-AP BFRP frame from the first AP and the second AP. For instance, the APs can jointly transmit a multi-AP BFRP frame. The multi-AP BFRP frame can be intended for reception by the STAs associated with the first AP and STAs associated with the second AP. Before transmission, the second AP can pre-correct its CFO and SFO relative to the first AP. The correction can be estimated from the information received in the trigger-1 or trigger-2 frames. The second AP can apply a cyclic shift to its transmitted signal compared to the signal of the first AP to avoid cancellation during reception by the STAs. The first AP and the second AP can transmit the multi-AP BFRP frame with separate preamble from payload. For example, for the multi-AP BFRP frame, both APs can transmit identical preamble contents and identical payload contents for consistency, in order to enable the STAs to decode the contents of the frame correctly. The multi-AP BFRP frame can use unique multi-AP MAC addresses for the TA and BSSID fields in the MAC header. These addresses can be different from the TA and BSSID addresses used by each AP for single-AP BFRP frames. The BFRP can use a special multi-AP broadcast RA distinct from the broadcast RA used by each AP for single-AP BFRP frames. The special MAC addresses can be recognized or identified by the STAs for whom the BFRP is intended. The STAs can maintain additional MAC addresses specifically for decoding multi-AP BFRP frames.

The multi-AP BFRP frame can include user information fields for each STA (from both the first AP and the second AP). The fields can include an AID assigned per STA, which can be different from the AID assigned to that STA within its corresponding network (BSS). The multi-AP BFRP frame can solicit the addressed STAs for CSI feedback on the composite channel H. The feedback can be based on the composite channel information (H) measured during the sounding process. The multi-AP BFRP frame can be transmitted in a non-HT PPDU format. The BFRP frame can specify the transmission parameters for each STA. The transmission parameters can include factors such as modulation and coding scheme (MCS), spatial stream allocation, and resource unit (RU) allocation. The transmission parameters can be configured such that the CSI feedback transmitted by each STA based on these settings can be decoded by the first AP and the second AP.

At 740, the method can include responding with a joint TB PPDU by the STAs addressed in the BFRP frame. For instance, upon receiving the multi-AP BFRP frame, the STAs addressed in the frame can respond with a joint TB PPDU. Within the TB PPDU, each STA can transmit its CSI feedback (e.g., compressed beamforming report (CBR)) based on the composite channel information (H) measured during the sounding process. Each STA can transmit its feedback according to the specific transmission parameters specified for the STA in the BFRP frame.

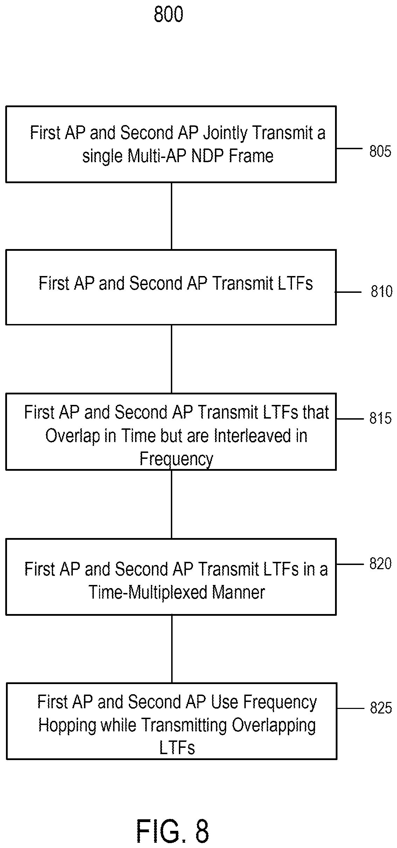

Referring now to FIG. 8 another example method 800 of downlink channel joint-sounding with multiple access points is illustrated. Method 800 can be implemented, using for example, systems 200 and 500 or any of the features discussed in connection with FIGS. 1-5. Method 800 can include acts 805-825. At 805, the method can include jointly transmitting a single multi-AP NDP frame by the first AP and the second AP. At 810, the method can include transmitting long training fields (LTFs) that overlap in time and frequency by the first AP and the second AP. At 815, the method can include transmitting LTFs that overlap in time but are interleaved in frequency by the first AP and the second AP. At 820, the method can include transmitting LTFs in a time-multiplexed manner by the first AP and the second AP. At 825, the method can include transmitting overlapping LTFs with frequency hopping by the first AP and the second AP.

At 805, the method can include jointly transmitting a single multi-AP NDP frame. For instance, the first AP and the second AP can jointly transmit a single multi-AP NDP frame. The single multi-AP NDP frame can be intended for reception by STAs associated with the first AP or AP2. Before transmission, the second AP can pre-correct its CFO and SFO relative to AP1. The second AP can apply a cyclic shift to its transmitted signal compared to the signal of the first AP to avoid cancellation during reception by the STAs. The multi-AP NDP frame can include a BSS color in the SIG field. The multi-AP BSS color can be different from the BSS color used by each AP in the corresponding single-AP NDP frames. There can be different options for constructing the long-training fields (LTFs) within the multi-AP NDP frames used by the STAs for channel estimation. The LTFs can occupy different bandwidths based on tone plans defined in Wi-Fi standards (e.g., 802.11ax, 802.11be, or later amendments to 802.11). The options can include 1× tone plan (decimate-by-4), 2x tone plan (decimate-by-2), and 4x tone plan (undecimated).

At 810, the method can include transmitting long training fields (LTFs) by the first AP and the second AP. For instance, the first AP and the second AP can transmit the respective LTFs simultaneously (overlapping in time and frequency). Each AP can modulate its transmitted LTFs with a sequence that is orthogonal to the sequence used by other APs. Both APs can transmit an equal number of LTFs. The number of LTFs can be determined based on the total number of transmit antennas across both APs. Both APs can use identical tone plans (1×, 2×, or 4×) as defined in the Wi-Fi standards. The STAs can process the received LTFs using the corresponding orthogonal sequences for each AP to estimate individual channels H1 (from AP1) and H2 (from AP2).

At 815, the method can include transmitting LTFs that overlap in time but are interleaved in frequency. For instance, the first AP and the second AP can transmit LTFs that overlap in time but are interleaved in frequency according to the selected tone plan. For example, the method can include a 2x tone plan, such as for example, comprising of tone indices [-500, - 498, -496, ... ,-6,-4, 4,6, ..., 496, 498, 500] over a bandwidth of 80 MHz, where the first AP and second AP transmit on alternating tones in a non-overlapping fashion. For example, the first AP can transmit on tones with indices [-500, -496, ... ,-8, -4, 6, ..., 494, 498], while the second AP can transmit on tones with indices [-498, -494, ... -6, 4, 8, ..., 496, 500], over a bandwidth of 80 MHz).

The method can include a 4x tone plan. For example, the method can include using tone indices [-500,-499,-498, ... ,-4,-3,3,4, ..., 498, 499, 500] over a bandwidth of 80MHz, wherein the first AP and second AP can transmit on alternating tones in a non-overlapping fashion. For instance, the first AP can transmit on tones with indices [-500, -498, ... ,-6, -4, 3, 5,..., 497, 499], while the second AP can transmit on tones with indices [-499, -497, ... -5,-3, 4, 6,..., 498, 500], over a bandwidth of 80 MHz where each AP can transmit on pilot-tones that are on one side of DC (0 frequency). For example, the method can include a 4x tone plan wherein the first AP and second AP transmit on alternating tones in a non-overlapping fashion such that each AP can transmit on pilot-tones that are symmetric about DC, i.e., 0 freq. For instance, for a 4x tone plan comprising of tone indices [-500,-499,-498, ... ,-4,-3,3,4, ..., 498, 499, 500] over a bandwidth of 80MHz, the first AP can transmit on tones with indices [-500, -498, .... -256, -254, -251,-249,...-5, -3, 3, 5,...,249, 251, 254, 256, ..., 498, 500], while the second AP can transmit on tones with indices [-499, -497, ...-255, -253, -252, -250, -248, ... -6,-4, 4, 6,...,248, 250, 252, 253, 255, ... 497, 499], over a bandwidth of 80 MHz), where each AP can transmit on pilot-tones that are symmetric about DC (0 frequency).

The LTF tone plans of 2x or 4x can be supported, with the allocation split across the APs as indicated in the examples provided above. The APs can transmit an equal number of LTFs, which can be determined by the maximum number of transmit antennas present across the APs. Each STA can initially estimate the individual channels H1 and H2, where H1 is estimated for the tones occupied by the first AP and H2 is estimated for the tones occupied by the second AP. The STA can interpolate or extrapolate the estimated individual channels H1 and H2 to the unoccupied tones by each AP before forming the composite channel. Each STA can separately track the common-phase-error (CPE) observed from each AP and can independently compensate for it.

At 820, the method can include transmitting LTFs in a time-multiplexed manner. For instance, the first AP and the second AP can transmit the respective LTFs in a time-multiplexed manner, which indicates that the APs do not overlap in time. Each AP can transmit its LTFs while the other remains silent (transmits zeros). Each AP can transmit a different number of LTFs depending on its total number of transmit antennas. The order in which the LTFs are transmitted can vary. For example, all LTFs from the first AP are transmitted first, followed by all LTFs from AP2. The LTFs from the APs can be interleaved in time. The ordering information can be signaled within the SIG-field of the NDP frame, predetermined through negotiation, or defined in the Wi-Fi standard. LTF tone plans of 1x (decimate-by-4), 2x (decimate-by-2), or 4x (undecimated) configurations can be used. The APs can select the same or different tone plans for their LTFs. The STAs can first estimate the individual channels H1 (from AP1) and H2 (from AP2) for the tones occupied by each AP, respectively. The STAs can interpolate or extrapolate the estimated channels to the unoccupied tones by each AP before forming the composite channel for beamforming purposes. Each STA can separately track the common-phase-error (CPE) observed from each AP and compensate for it independently.

At 825, the method can include transmitting overlapping LTFs with frequency hopping. For instance, the APs transmit overlapping LTFs with frequency hopping. The total bandwidth occupied by the LTFs can be divided equally into two halves: unit 1 (U1) and unit 2 (U2). For example, for an NDP frame with 80 MHz bandwidth and 1024 subcarriers indexed as [-512... -1,0,1... 511], U1 can span the lower half tones [-512... -1] and U2 can span the upper half tones [0...511]. U1 and U2 can be mapped to Resource Units (RUs) defined in the Wi-Fi standards, where U1 represents the lower-half bandwidth RU and U2 represents the upper-half bandwidth RU. For example, for the same 80MHz bandwidth example, U1 can correspond to a 484-tone RU1 and U2 can correspond to a 484-tone RU2, as defined in Wi-Fi standards.

A total of 2N LTF symbols can be transmitted, where N is determined by the maximum number of transmit antennas across both APs. LTF tone plans based on 1x, 2x, or 4x configurations (as allowed by the selected Wi-Fi standards) can be used. During the first N LTF symbol transmission, the first AP can transmit its LTF signal over U1 (lower half bandwidth), and the second AP can transmit its LTF signal over U2 (upper half bandwidth). Based on the received signals, each STA can estimate two channel (H11 and H22) responses: H11 can be the channel from first AP over U1 (lower half bandwidth). H22 can be the channel from the second AP over U2 (upper half bandwidth). During the second N LTF symbol transmissions, the first AP can transmit its LTF signal over U2 (upper half bandwidth), and the second AP can transmit its LTF signal over U1 (lower half bandwidth). Based on the received signals, each STA can estimate two additional channel (H12 and H21) responses. H12 can be the channel from the first AP over U2 (upper half bandwidth). H21 can be the channel from the second AP over U1 (lower half bandwidth).

Each STA can construct the composite channel for the entire bandwidth by combining the individually estimated channel components (H11, H12, H21, and H22). The composite channel over U1 can be formed by combining H11 (the first AP over U1) and H21 (the second AP over U1). The composite channel over U2 is formed by combining H12 (the first AP over U2) and H22 (the second AP over U2). Each STA may separately track the CPE observed from each AP over each RU and compensate for it independently.

In some configurations, instead of a single multi-AP NDP, the APs can transmit multiple NDPs sequentially. The first AP can start by transmitting its NDP frame, identified by its BSS color. The STAs can receive the signal from the first AP and estimate the channel response H1. The STAs store the channel response H1. After a short interframe space (SIFS), the second AP can transmit its NDP frame, identified by its BSS color. The STAs can estimate the channel response (H2) from the second AP and can store the channel response H2. The STA can account for the variations in core-to-core gain and core-to-core phase that may occur between receiving NDP-1 and NDP-2. The core-to-core variations can be caused by factors such as automatic gain control (AGC) or analog-to-digital converter (ADC) differences. The STAs can construct the composite channel from the estimated H1 (from AP1) and H2 (from AP2), after compensating for the variations in core-to-core gain and core-to-core phase between receiving NDP-1 and receiving NDP-2.

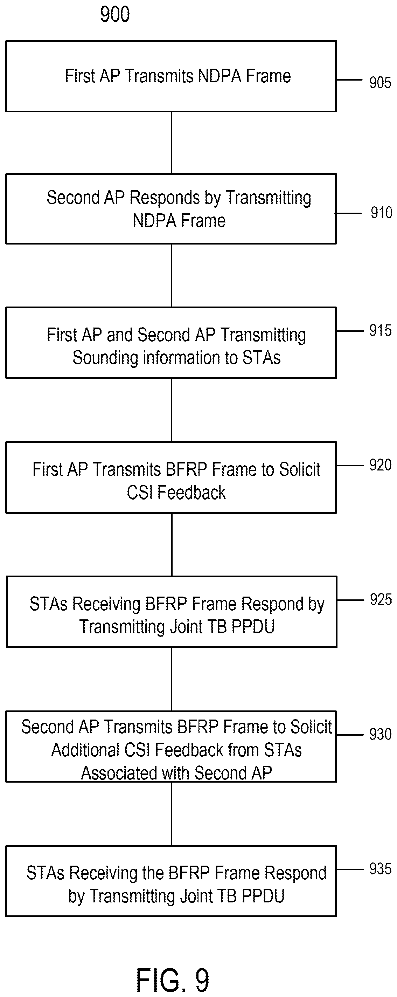

Referring now to FIG. 9 another example method 900 of downlink channel joint-sounding with multiple access points is illustrated. Method 900 can be implemented, using for example, systems 200 and 500 or any of the features discussed in connection with FIGS. 1-5. Method 900 can include acts 905-935. At 905, the method can include transmitting an NDPA frame (e.g., NDPA-1 frame) from the first AP. At 910, the method can include transmitting an NDPA frame (e.g., NDPA-2 frame) from the second AP. At 915, the method can include transmitting sounding information to the STAs through a single joint-NDP frame or sequential NDP frames by the first AP and the second AP. At 920, the method can include initiating a feedback request by the first AP transmitting a BFRP frame (e.g., BFRP-1 frame). At 925, the method can include responding with a joint TB PPDU by the STAs receiving the BFRP frame (e.g., BFRP-1 frame). At 930, the method can include transmitting a BFRP frame (e.g., BFRP-2 frame) from the second AP to solicit CSI feedback from STAs associated with the second AP for the composite channel. At 935, the method can include responding with a joint TB PPDU by the STAs receiving the BFRP frame (e.g., BFRP-2 frame).

At 905, the method can include transmitting an NDPA frame. For instance, the first AP can transmit an NDPA-1 frame. The NDPA-1 frame can trigger the second AP to initiate its corresponding functions. The NDPA-1 frame can trigger the second AP via a STA-information field with a predefined AID value. The second AP can use the information in the NDPA-1 frame to estimate its own CFO and SFO relative to the first AP. The NDPA-1 frame can include STA information fields addressed to STAs associated with the first AP. The STA-information fields can identify the type of feedback solicited from each STA. The NDPA-1 frame can specify or indicate the multi-AP sounding sequence being used to differentiate the sequence from single-AP sounding or other multi-AP sounding approaches. The NDPA-1 frame can be transmitted in a non-HT PPDU format.

At 910, the method can include transmitting an NDPA frame. For instance, the second AP can transmit an NDPA-2 frame, in response to NDPA-1 frame transmitted by the first AP. The NDPA-2 frame can include STA-information fields addressed to the STAs associated with the second AP. The NDPA-2 frame can include information about the multi-AP sounding sequence being used. The NDPA-2 frame may also be transmitted in a non-HT PPDU format.

At 915, the method can include transmitting sounding information to the STAs through a single joint-NDP frame or sequential NDP frames. For instance, the first AP and the second AP can transmit the sounding information to the STAs through a single joint-NDP frame, which can include the information for the STAs to measure the DL channel from both APs. The first AP and the second AP can transmit the sounding information to the STAs through two sequential NDP frames, with each frame including information for measuring the channel from a specific AP. The selection between a joint NDP or sequential NDPs can be determined through prior negotiation or signaling mechanisms. Each STA can measure the DL channel from one or more APs based on the received sounding information. For example, STA can measure the channel H1 from the first AP and the channel H2 from the second AP. Once the individual channel measurements (H1 and H2) are completed, each STA can form a composite channel H.

At 920, the method can include initiating a feedback request by transmitting a BFRP frame. For instance, the first AP can initiate the feedback request by transmitting a BFRP-1 frame. The BFRP-1 frame can solicit CSI feedback from the STAs associated with the first AP for the composite channel H. The BFRP-1 frame can be transmitted in a non-HT PPDU format. The BFRP-1 frame specifies transmission parameters (e.g., MCS, spatial-stream allocation, RU allocation, etc.) for each addressed STA. The transmission parameters can be configured such that the responding TB PPDU transmitted by the STA based on these settings can be decoded by the first AP and the second AP.

At 925, the method can include responding with a joint TB PPDU by the STAs. For instance, the STAs that are addressed by and receive the BFRP-1 frame can jointly transmit a TB PPDU in response. Each participating STA can feed back its CSI (e.g., CBR) based on the composite channel H. The feedback can be transmitted according to the transmission parameters assigned to the STA in the BFRP-1 frame.

At 930, the method can include transmitting a BFRP frame. For instance, the second AP can transmit a BFRP-2 frame, which can solicit CSI feedback from the STAs associated with the second AP for the composite channel H. The BFRP-2 frame can be transmitted in a non-HT PPDU format. The BFRP-2 frame can specify transmission parameters for each addressed STA. The transmission parameters can be configured such that the responding TB PPDU transmitted by the STA can be decoded by the first AP and the second AP.

At 935, the method can include responding with a joint TB PPDU by the STAs. For instance, the STAs addressed by and receiving BFRP-2 can jointly transmit a TB PPDU in response. Each STA can send the CSI feedback (e.g., CBR) based on the composite channel H. The feedback can be transmitted according to the parameters assigned to the STA in the received BFRP-2 frame. For NDPA-1, NDPA-2, BFRP-1, and BFRP-2 frames, the MAC addresses and AIDs used by the first AP and the second AP can be the same as the MAC addresses and AIDs used for single-AP sounding transmissions.

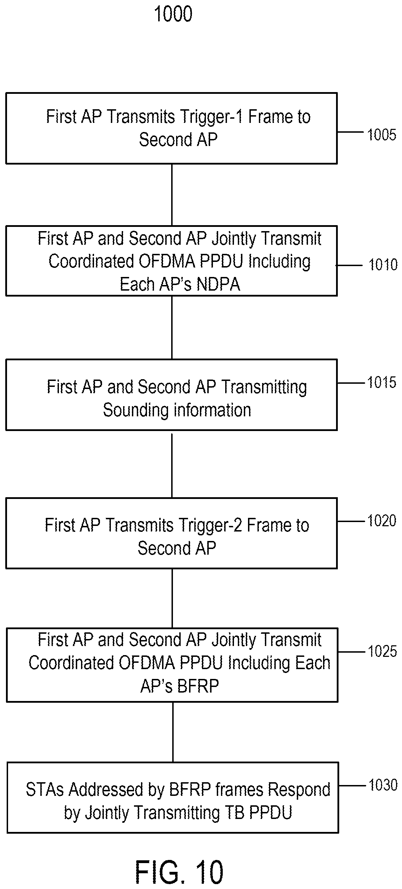

Referring now to FIG. 10 another example method 1000 of downlink channel joint-sounding with multiple access points is illustrated. Method 1000 can be implemented, using for example, systems 200 and 500 or any of the features discussed in connection with FIGS. 1-5. Method 1000 can include acts 1005-1025. At 1005, the method can include transmitting a trigger frame (e.g., trigger-1 frame) from the first AP to the second AP. At 1010, the method can include jointly transmitting a coordinated OFDMA PPDU, including each AP's NDPA, by the first AP and the second AP. At 1015, the method can include transmitting sounding information to the STAs through a single joint-NDP frame or sequential NDP frames by the first AP and the second AP. At 1020, the method can include transmitting a trigger frame (e.g., trigger-2 frame) from the first AP to the second AP. At 1025, the method can include jointly transmitting a coordinated OFDMA PPDU, including each AP's BFRP (e.g., BFRP-1 and BFRP-2 frames), by the first AP and the second AP. At 1030, the method can include responding with a joint TB PPDU by STAs addressed by the BFRP frame (e.g., the BFRP-1 frame, or the BFRP-2 frame).

At 1005, the method can include transmitting a trigger frame. For instance, the first AP can transmit a trigger-1 frame to the second AP. The trigger-1 frame can indicate the parameters for constructing a coordinated OFDMA frame for the NDPA transmission. The parameters can include RU allocation for each AP, symbol duration, guard interval, and total transmission duration. The second AP can use the information in the trigger-1 frame to estimate its CFO and SFO relative to the first AP. The trigger-1 frame can be transmitted in a non-HT PPDU format. Additionally, the trigger-1 frame can include parameters for constructing the coordinated OFDMA frame to be used for BFRP transmissions. The trigger-1 frame can specify the allowed RUs for each STA associated with the APs to use when responding to the BFRP with a TB PPDU.

At 1010, the method can include jointly transmitting a coordinated OFDMA PPDU, including each AP's NDPA. For instance, the first AP and the second AP can jointly transmit a coordinated OFDMA PPDU that carries the NDPAs associated with each AP. Before transmitting, the second AP can pre-correct its CFO and SFO relative to the first AP (e.g., based on the estimates obtained from the trigger-1 frame). Additionally, the second AP can apply a cyclic shift to its transmitted signal relative to the signal of the first AP to avoid cancellation during the preamble. Based on the parameters specified in trigger-1, the first AP can transmit the NDPA-1 frame, and the second AP can transmit the NDPA-2 frame on their respective allocated RUs within the coordinated OFDMA frame. The NDPA-1 and NDPA-2 frames can include STA information fields addressed to one or more STAs associated with the corresponding AP (e.g., identified by their AIDs). The STA-information fields can specify or identify the type of feedback solicited from each STA. The NDPA frames can include information about the specific multi-AP sounding sequence being used to distinguish the multi-AP sounding sequence from single-AP sounding or other multi-AP approaches.

At 1015, the method can include transmitting sounding information to the STAs through a single joint-NDP frame or sequential NDP frames. For instance, the first AP and the second AP can transmit the sounding information to the STAs through a single joint-NDP frame, which can include all the desired information for the STAs to measure the DL channel from both APs. For instance, the first AP and the second AP can transmit the sounding information to the STAs through two sequential NDP frames, with each frame including information for measuring the channel from a specific AP. The selection between a joint NDP or sequential NDPs can be determined through prior negotiation or signaling mechanisms. Each STA can measure the DL channel from one or more APs based on the received sounding information. For example, each STA can measure the channel H1 from the first AP and the channel H2 from the second AP. Once the individual channel measurements (H1 and H2) are completed, each STA can form a composite channel H.

At 1020, the first AP can transmit an optional trigger-2 frame to the second AP. The trigger-2 frame can specify or indicate the parameters for constructing the coordinated OFDMA frame for BFRP transmissions. The trigger-2 frame can define the allowed RUs for the STAs associated with each AP to use when responding to the BFRP with a TB PPDU. The trigger-2 frame can be transmitted in a non-HT PPDU format. Upon receiving trigger-2 (if sent), the second AP can further refine or re-estimate its CFO and SFO relative to the first AP.

At 1025, the method can include jointly transmitting a coordinated OFDMA PPDU, including each AP's BFRP. For instance, the first AP and the second AP can jointly transmit a coordinated OFDMA PPDU that carries the BFRPs of each AP. Before transmitting, the second AP can pre-correct its CFO and SFO relative to the first AP based on the information received in the trigger frame (e.g., trigger-2, if sent, else trigger-1). Additionally, the second AP can apply a cyclic shift to its transmitted signal relative to the signal of the first AP to avoid cancellation during the preamble. Based on the parameters specified in the preceding trigger frame (trigger-2 if sent, else trigger-1), the first AP can transmit the BFRP-1 and the second AP can transmit the BFRP-2 on their respective allocated RUs within the coordinated OFDMA frame. The BFRP-1 and BFRP-2 frames can solicit CSI feedback from the corresponding STAs associated with respective APs for the composite channel H. The BFRP frames can specify transmission parameters (e.g., MCS, spatial-stream allocation, RU allocation, etc.) for each addressed STA. The transmission parameters can be configured such that the responding TB PPDU transmitted by the STA based on these settings can be decoded by both the first AP and the second AP.

At 1030, the method can include responding with a joint TB PPDU by STAs. For instance, the STAs that are addressed by and receive the BFRP frame (e.g., the BFRP-1 frame, or the BFRP-2 frame) can jointly transmit a TB PPDU in response. Each participating STA can feed back CSI (e.g., CBR) based on the composite channel H. The feedback can be transmitted according to the transmission parameters specified for the STA in the BFRP frame they received. In some configurations, for NDPA-1, NDPA-2, BFRP-1, and BFRP-2 frames, the first AP and the second AP can use the same MAC addresses as the ones used for their respective single-AP sounding transmissions.

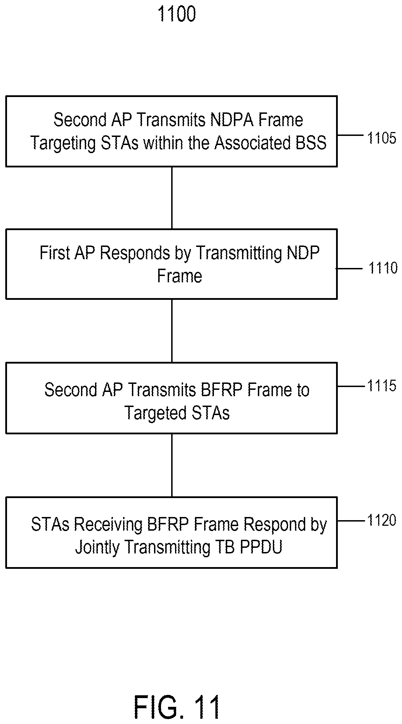

Referring now to FIG. 11 an example method 1100 of downlink channel individual-sounding with multiple access points is illustrated. Method 1100 can be implemented, using for example, systems 200 and 500 or any of the features discussed in connection with FIGS. 1-5. Method 1100 can include acts 1105-1120. At 1105, the method can include transmitting an NDPA frame by the second AP targeting STAs within the associated BSS. At 1110, the method can include transmitting an NDP frame by the first AP in response to the NDPA from the second AP. At 1115, the method can include transmitting a BFRP frame by the second AP to targeted STAs. At 1120, the method can include responding with a joint TB PPDU by targeted STAs receiving the BFRP frame.

At 1105, the method can include transmitting an NDPA frame by the second AP targeting STAs within the associated BSS. For instance, the second AP can transmit the NDPA frame that addresses STAs within the BSS (e.g., a second set of one or more STAs) of the second AP. The NDPA frame can specify or identify the desired type of CSI feedback for each addressed STA. The NDPA frame can include a field to signal the first AP to prepare for NDP transmission, for example, using a predetermined AID value in the STA-information field within the NDPA frame. The NDPA frame can include one or more association identifiers (AIDs) corresponding to the addressed stations of the second AP. The NDPA frame can be transmitted in a non-HT PPDU format. The second AP can send the NDPA directly without waiting for a trigger from the first AP. For instance, the second AP can determine which of its associated STAs may participate in coordinated beamforming (CBF) based on DL buffered traffic.

At 1110, the method can include transmitting an NDP frame by the first AP. For instance, the first AP can transmit the NDP frame in response to the received the NDPA frame from the second AP. The NDP frame can trigger the sounding process for the STAs associated with the second AP. The preamble of the NDP frame can include a BSS color corresponding to the BSS of the second AP. The preamble of the NDP frame can identify the BSS of the second AP. The NDP frame can include the same number of long training fields (LTFs) as a regular single-AP NDP transmitted by the first AP within the BSS associated with the first AP. The STAs associated with the second AP that are addressed by the NDPA, can measure the DL channel (H1) from the first AP based on the NDP frame.

At 1115, the method can include transmitting a BFRP frame to addressed STAs. For instance, the second AP can transmit a BFRP frame to the addressed STAs. The BFRP frame can solicit CSI feedback for the DL channel H1 (with respect to the first AP) from the STAs associated with the second AP (e.g., the second set of STAs) that are addressed by the NDPA at 1105. The BFRP frame can be transmitted in a non-HT PPDU format. The BFRP frame can include transmission parameters, such as MCS, spatial streams, and resource unit allocation for each STA in the BFRP frame. Each BFRP frame can include one or more AIDs corresponding to the addressed stations within the second set (e.g., STAs associated with the second AP). The parameters can be configured such that the first AP can decode the response transmitted by each STA. The type of CSI feedback solicited in the NDPA and the transmission parameters for the feedback response (signaled in the BFRP) can be pre-negotiated between the first AP and the second AP. The pre-negotiation process can be transparent to STAs associated with the second AP. The first AP and the second AP can exchange communication to determine a type of CSI to gather on the DL channel and identify the determined type of CSI in one or more NDPA frames.

At 1120, the method can include responding with a joint TB PPDU by STAs receiving the BFRP frame. For instance, the STAs that are addressed by and receive the BFRP frame can respond by jointly transmitting a TB PPDU. The TB PPDU can cause the STAs to provide CSI based on the DL channel (H1) the STAs measured upon receiving the NDP frame from the first AP. For instance, each STA can feed back CSI, such as CBR, based on the DL channel H1 the targeted STAs measured. The CSI feedback can be transmitted according to the transmission parameters specified for each STA in the BFRP frame. The CSI feedback can be received directly by the first AP (over the air). The CSI feedback can be received first by the second AP and then forwarded to the first AP.

In some configurations, the MAC addresses and AIDs used in both the NDPA and BFRP frames can be identical to the MAC addresses and AIDs used for single-AP sounding by the second AP. The STAs associated with the second AP may not be aware of the first AP sending the NDP. It is to be noted that a similar process can be implemented with the roles of the first AP and the second AP swapped, for example, for communication between the second AP and the STAs associated with the first AP.

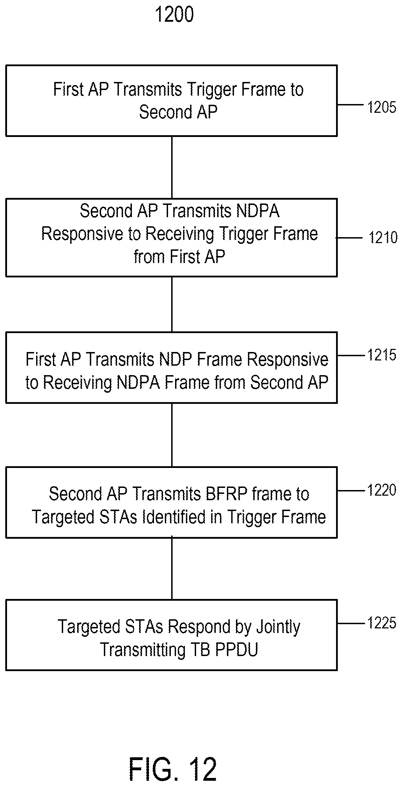

Referring now to FIG. 12 another example method 1200 of downlink channel individual-sounding with multiple access points is illustrated. Method 1200 can be implemented, using for example, systems 200 and 500 or any of the features discussed in connection with FIGS. 1-5. Method 1200 can include acts 1205-1225. At 1205, the method can include transmitting a trigger frame by the first AP to the second AP. At 1210, the method can include transmitting an NDPA frame by the second AP in response to receiving the trigger frame from the first AP. At 1215, the method can include transmitting an NDP frame by the first AP in response to the NDPA from the second AP. At 1220, the method can include transmitting a BFRP frame by the second AP to the targeted STAs as identified in the trigger frame. At 1225, the method can include jointly transmitting a TB PPDU by the targeted STAs in response to the BFRP frame from the second AP.

At 1205, the method can include transmitting a trigger frame. For instance, the first AP can transmit a trigger frame to the second AP. The trigger frame from the first AP can include information for the second AP to construct the subsequent NDPA and BFRP frames. The trigger frame can include the set of STAs within the BSS associated with the second AP that are to be sounded (i.e., whose channel state information (CSI) from the first AP is to be measured), the type of CSI feedback expected from each STA, and additional information for constructing the BFRP frame, such as RU allocation for each STA, the MCS assigned to each STA, and the number of spatial streams (Nss) assigned to each STA being sounded.

At 1210, the method can include transmitting an NDPA frame by the second AP. For instance, based on the information received in the trigger frame from the first AP, the second AP can transmit an NDPA frame. The NDPA frame from the second AP can be addressed to the specific STAs within the BSS associated with the second AP, as identified in the trigger frame. The NDPA frame can be transmitted in a non-HT PPDU format.

At 1215, the method can include transmitting an NDP frame by the first AP. For instance, the first AP can transmit an NDP frame in response to the received NDPA from the second AP. The preamble of the NDP frame can include a BSS color corresponding to the BSS of the second AP. The number of LTFs in the NDP frame can be the same as a regular single-AP NDP transmitted by the first AP within the BSS associated with the first AP. Based on the NDP frame, the targeted STAs associated with the second AP, which are addressed by the NDPA, can measure the DL channel (H1) from the first AP.

At 1220, the method can include transmitting a BFRP frame by the second AP to the targeted STAs. For instance, the second AP can transmit a BFRP frame to the targeted STAs identified in the trigger frame. The BFRP frame from the second AP can solicit CSI feedback for channel H1 from the STAs associated with the second AP. The BFRP frame can be transmitted in a non-HT PPDU format. The BFRP frame can include per-STA transmission parameters, such as MCS, spatial-stream allocation, and RU allocation. The transmission parameters can be configured such that the response transmitted by the targeted STA based on the transmission parameters can be decoded by the first AP.

At 1225, the method can include jointly transmitting a TB PPDU by the targeted STAs. For instance, the targeted STAs can jointly transmit a TB PPDU in response to receiving the BFRP frame from the second AP. Each STA can feed back CSI, such as CBR, based on the DL channel H1 measured by each targeted STA. The CSI feedback transmission can follow the per-STA parameters specified in the received BFRP frame. The CSI feedback can be received directly by the first AP (over the air), or can be received first by the second AP and then forwarded to the first AP.

In some configurations, the MAC addresses and AIDs used in both the NDPA and BFRP frames can be identical to the MAC addresses and AIDs used for single-AP sounding by the second AP. The sounding process can be transparent to the targeted STAs of the second AP. The targeted STAs of the second AP may not be aware that the first AP is transmitting the NDP frame. A similar process can be implemented by swapping the roles of the first AP and the second AP, for example, for communication between the second AP and the STAs associated with the first AP.

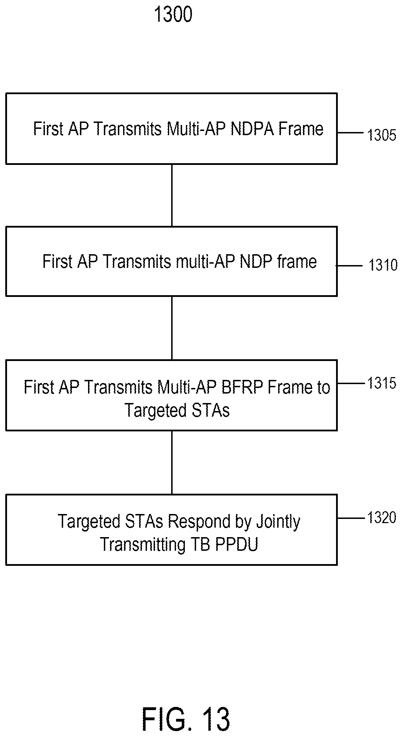

Referring now to FIG. 13 another example method 1300 of downlink channel individual-sounding with multiple access points is illustrated. Method 1300 can be implemented, using for example, systems 200 and 500 or any of the features discussed in connection with FIGS. 1-5. Method 1300 can include acts 1305-1320. At 1305, the method can include transmitting a multi-AP NDPA frame by the first AP. At 1310, the method can include transmitting a multi-AP NDP frame by the first AP. At 1315, the method can include transmitting a multi-AP BFRP frame by the first AP. At 1320, the method can include jointly transmitting a TB PPDU by STAs addressed by the multi-AP BFRP frame.

At 1305, the method can include transmitting a multi-AP NDPA frame. For instance, the first AP can transmit a multi-AP NDPA frame. The multi-AP NDPA frame can use multi-AP MAC addresses for the TA and BSSID fields in the MAC header, which can be different from the regular TA and BSSID addresses used by each AP for single-AP NDPA frames. The NDPA frame can use a multi-AP broadcast receive-address (RA) that is different from the broadcast RA used by each AP for single-AP NDPA frames. The STAs intended to receive the NDPA frame can recognize the addresses, for example, the STA may maintain additional MAC addresses for decoding multi-AP NDPA. The NDPA frame can include STA-info fields for the STAs associated with the first AP. The NDPA frame can include STA-info fields for the STAs associated with the second AP. Each STA-info field can be addressed to a STA via AID, which can be different from the AID used for addressing that STA in regular single-AP NDPA frames. Each STA-info field can specify or identify the type of CSI feedback solicited from the STA to which the STA-info field is addressed. The multi-AP NDPA frame can indicate the specific multi-AP sounding sequence being used to differentiate it from single-AP and other multi-AP sounding sequences. The multi-AP NDPA frame format can be a non-HT PPDU.

At 1310, the method can include transmitting a multi-AP NDP frame. For instance, the first AP can transmit a multi-AP NDP frame. The SIG-field in the multi-AP NDP frame can indicate a predefined multi-AP BSS color that is different from the BSS color signaled in regular single-AP NDPs within each BSS. The number of LTFs in the multi-AP NDP frame can be the same as the regular single-AP NDP transmitted by the first AP within the BSS associated with the first AP. Based on the information in the multi-AP NDP, the STAs that are addressed by and receive the multi-AP NDP frame can estimate the DL channel H1 from the first AP.

At 1315, the method can include transmitting a multi-AP BFRP frame. For instance, the first AP can transmit a multi-AP BFRP frame. The multi-AP BFRP frame from the first AP can use multi-AP MAC addresses for the TA and BSSID fields in the MAC header. The multi-AP MAC addresses for the TA and BSSID fields in the MAC header can be different from the TA, BSSID addresses used by each AP for single-AP BFRP frames. The multi-AP BFRP frame can use a multi-AP broadcast RA that is different from the broadcast RA used by each AP for single-AP BFRP frames. The multi-AP addresses can be identified by the STAs intended to receive the BFRP. The BFRP frame can include UserInfo fields for the STAs associated with the first AP. The BFRP frame can include UserInfo fields for the STAs associated with the second AP. Each UserInfo field can have an AID assigned per STA, which can be different from the AID assigned to the UserInfo field within its corresponding BSS. The multi-AP BFRP frame can solicit CSI feedback on DL channel H1 from the STAs associated with the first AP. The multi-AP BFRP frame can solicit CSI feedback on DL channel H1 from the STAs associated with the second AP. The multi-AP BFRP frame format can be a non-HT PPDU.

At 1320, the method can include jointly transmitting a TB PPDU by STAs addressed by the multi-AP BFRP frame. For instance, the STAs that are addressed by and receive the multi-AP BFRP frame can jointly transmit a TB PPDU in response. Each STA can transmit on the RU and spatial stream assigned to the STA in the multi-AP BFRP frame. Each STA can feed back CSI, such as a CBR, based on the DL channel H1 that is measured from the first AP.

The process for the second AP in relation to the STAs associated with the first AP and the STAs associated with the second AP can be the same as described above, with the roles of the first AP and the second AP swapped.

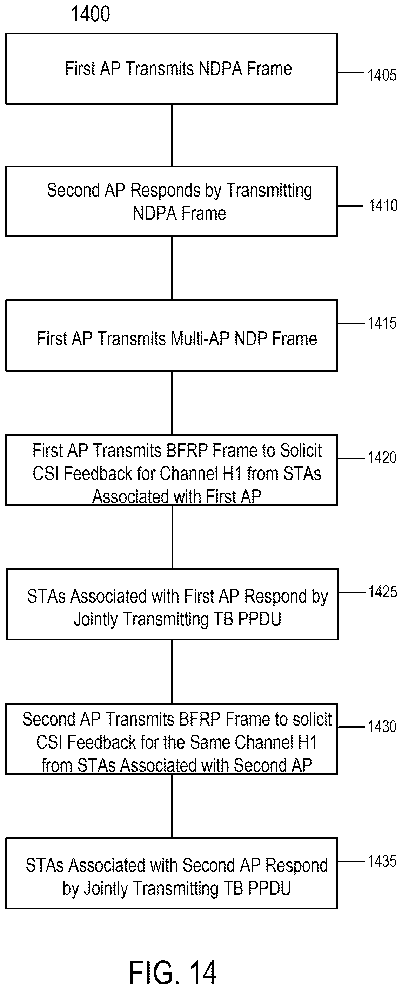

Referring now to FIG. 14 another example method 1400 of downlink channel individual-sounding with multiple access points is illustrated. Method 1400 can be implemented, using for example, systems 200 and 500 or any of the features discussed in connection with FIGS. 1-5. Method 1400 can include acts 1405-1435. At 1405, the method can include transmitting an NDPA frame (e.g., NDPA-1 frame) by the first AP as a trigger for the second AP. At 1410, the method can include transmitting an NDPA frame (e.g., an NDPA-2 frame) by the second AP, in response to the NDPA frame from the first AP. At 1415, the method can include transmitting a multi-AP NDP frame by the first AP. At 1420, the method can include transmitting a BFRP frame (e.g., BFRP-1 frame) by the first AP soliciting CSI feedback for channel H1 from STAs associated with the first AP. At 1425, the method can include responding with a joint TB PPDU by STAs associated with the first AP. At 1430, the method can include transmitting a BFRP frame (e.g., BFRP-2 frame) by the second AP soliciting CSI feedback for channel H1 from STAs associated with the second AP. At 1435, the method can include responding with a joint TB PPDU by STAs associated with the second AP.

At 1405, the method can include transmitting an NDPA frame by the first AP. For instance, the first AP can transmit an NDPA-1 frame that can function as a trigger for the second AP, for example, using a predetermined AID value within a STA-info field. The NDPA-1 frame can include STA-info fields addressed to the STAs associated with the first AP. The STA-information fields can specify or identify the type of CSI feedback expected from each STA. The NDPA-1 frame can indicate the multi-AP sounding sequence being used to distinguish the sequence from single-AP and other multi-AP sounding sequences. The format of the NDPA-1 frame can be a non-HT PPDU.

At 1410, the method can include transmitting an NDPA frame by the second AP. For instance, the second AP can transmit an NDPA-2 frame that includes STA-information fields addressed to the STAs associated with the second AP. The STA-information fields can identify the type of feedback solicited from each STA. The NDPA-2 frame can indicate the multi-AP sounding sequence being used. The format of the NDPA-2 frame can be a non-HT PPDU.

At 1415, the method can include transmitting a multi-AP NDP frame. For instance, the first AP can transmit a multi-AP NDP frame. The signal-field (SIG-field) in the multi-AP NDP frame from the first AP can indicate a multi-AP BSS color that is different from the BSS color signaled in regular single-AP NDPs within each BSS. The number of LTFs in the NDP frame can be the same as a regular single-AP NDP transmitted by the first AP within its own BSS. The STAs that are addressed by and receive the NDPA-1 or NDPA-2 frame can measure the DL channel H1 from the first AP based on the information in the multi-AP NDP.

At 1420, the method can include transmitting a BFRP frame by the first AP soliciting CSI feedback. For instance, the first AP can transmit a BFRP-1 frame soliciting CSI feedback of channel H1 from the STAs associated with the first AP. The format of the BFRP-1 frame can be a non-HT PPDU.

At 1425, the method can include responding with a joint TB PPDU by STAs associated with the first AP. For instance, the STAs associated with the first AP can respond with CSI feedback. The STAs associated with the first AP that are addressed by and receive the BFRP-1 frame can jointly transmit a TB PPDU in response. Each STA can feed back CSI, such as CBR, based on the DL channel H1 from the first AP. The CSI feedback can be transmitted according to the transmission parameters assigned to each STA in the BFRP-1 frame, such as MCS, spatial streams, and RU allocation.

At 1430, the method can include transmitting a BFRP frame by the second AP soliciting CSI feedback. For instance, the second AP can transmit a BFRP-2 frame soliciting CSI feedback of channel H1 from the STAs associated with the second AP. The format of the BFRP-2 can be a non-HT PPDU. The transmission parameters specified per STA in the BFRP-2 frame, such as MCS, spatial-stream allocation, and resource unit (RU) allocation, can be configured such that the first AP can correctly decode the response transmitted by that STA based on the transmission parameters.

At 1435, the method can include responding with a joint TB PPDU by STAs associated with the second AP. For instance, the STAs associated with the second AP that are addressed by and receive the BFRP-2 frame can jointly transmit a TB PPDU in response. Each STA can feed back CSI, such as CBR, based on the downlink channel H1 from the first AP. The CSI feedback can be transmitted according to the transmission parameters assigned to each STA in the BFRP-2 frame, such as MCS, spatial streams, and RU allocation. In some configurations, the MAC addresses and AIDs used in NDPA-1 and BFRP-1 can be identical to the corresponding MAC addresses and AIDs used for single-AP sounding by the first AP. In some configurations, the MAC addresses and AIDs used in NDPA-2 and BFRP-2 can be identical to the corresponding MAC addresses and AIDs used for single-AP sounding by the second AP.

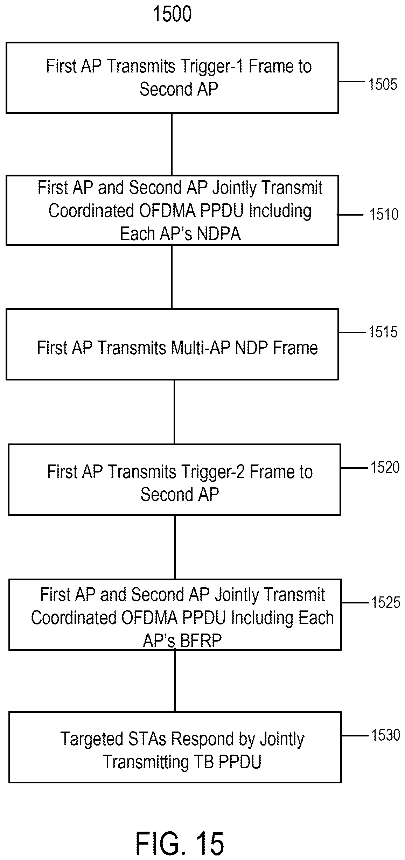

Referring now to FIG. 15 another example method 1500 of downlink channel individual-sounding with multiple access points is illustrated. Method 1500 can be implemented, using for example, systems 200 and 500 or any of the features discussed in connection with FIGS. 1-5. Method 1500 can include acts 1505-1525. At 1505, the method can include transmitting a trigger frame (e.g., trigger-1 frame) by the first AP to the second AP. At 1510, the method can include jointly transmitting a coordinated-OFDMA PPDU, including each AP's NDPA, by the first AP and the second AP, in response to the trigger frame. At 1515, the method can include transmitting a multi-AP NDP frame from the first AP. At 1520, the method can include transmitting a trigger frame (e.g., trigger-2 frame) from the first AP to the second AP. At 1525, the method can include jointly transmitting a coordinated-OFDMA PPDU, including each AP's BFRP, by the first AP and the second AP. At 1530, the method can include jointly transmitting a TB PPDU by STAs addressed by each AP's BFRP.

At 1505, the method can include transmitting a trigger frame by the first AP to the second AP. For instance, the first AP can transmit a trigger-1 frame that indicates parameters for constructing a coordinated orthogonal frequency-division multiple access (OFDMA) frame for transmitting NDPA information. The parameters in the trigger-1 frame can include aspects, such as RU allocation for each AP, symbol duration, guard interval, and total duration, among others. The parameters can be similar to the parameters used in a trigger frame for soliciting a TB PPDU. The second AP can use the information in the trigger-1 frame to estimate the CFO and SFO relative to the first AP. The format of the trigger-1 frame can be a non-HT PPDU. The trigger-1 frame can include parameters for constructing a coordinated-OFDMA frame for BFRP, which may include information on allowed RUs for each AP's STAs to transmit the TB PPDU in response to the BFRP frame.

At 1510, the method can include jointly transmitting a coordinated-OFDMA PPDU, including each AP's NDPA. For instance, the first AP and the second AP can jointly transmit a coordinated-OFDMA PPDU, including the NDPA frames associated with each AP. Before transmission, the second AP can pre-correct CFO and SFO relative to the first AP to ensure signal alignment. The second AP can apply a cyclic shift to its transmitted signal relative to the first AP, for example, for the preamble, to avoid signal cancellation. Based on the parameters specified in trigger-1, the first AP and the second AP can respectively transmit NDPA-1 and NDPA-2 on their allocated RUs. Each NDPA frame (NDPA-1 and NDPA-2) can include STA-information fields addressed to the respective AP's STAs using their AIDs. The STA-information fields can specify or identify the type of feedback solicited from each STA. NDPA-1 and NDPA-2 can indicate the multi-AP sounding sequence being used to distinguish the sequence from single-AP and other multi-AP sounding sequences.

At 1515, the method can include transmitting a multi-AP NDP frame. For instance, the first AP can transmit a multi-AP NDP frame. The SIG-field in the multi-AP NDP frame can indicate a multi-AP BSS color that is different from the BSS color signaled in regular single-AP NDPs within each BSS. The multi-AP NDP frame can include the same number of LTFs as a regular single-AP NDP transmitted by the first AP within its own BSS. The STAs that are addressed by and receive the NDPA-1 or NDPA-2 can measure the DL channel H1 from the first AP using the NDP.

At 1520, the first AP can optionally transmit a trigger-2 frame to the second AP. Similar to trigger-1, the trigger-2 frame can specify parameters for constructing a coordinated-OFDMA frame for BFRP, as well as the allowed RUs for each AP's STAs to transmit the TB PPDU in response to BFRP. The format of the trigger-2 frame can be a non-HT PPDU. If transmitted, the second AP can refine or re-estimate CFO and SFO relative to the first AP.

At 1525, the method can include jointly transmitting a coordinated-OFDMA PPDU, including each AP's BFRP. For instance, the first AP and the second AP can jointly transmit a coordinated-OFDMA PPDU including each AP's BFRP frames. The second AP can pre-correct CFO and SFO relative to the first AP before transmission. The second AP can apply a cyclic shift to its transmitted signal relative to the first AP to avoid signal cancellation (for the preamble). Based on the parameters specified in the preceding trigger frame (trigger-2 if present, else trigger-1), the first AP and the second AP can respectively transmit BFRP-1 and BFRP-2 on their allocated RUs. BFRP-1 and BFRP-2 can respectively solicit the first AP's STAs and the second AP's STAs for CSI feedback of the DL channel H1. The transmission parameters specified per STA in the BFRP frames, such as MCS, spatial-stream allocation, and RU allocation, can be configured such that the first AP can correctly decode the response transmitted by the corresponding STA based on the transmission parameters.

At 1530, the method can include jointly transmitting a TB PPDU by STAs. For instance, the STAs that are addressed by and receive BFRP-1 or BFRP-2 can jointly transmit a TB PPDU in response. Each STA can feed back CSI, such as CBR, based on the DL channel H1. The CSI feedback can be transmitted according to the transmission parameters specified for the STA in its corresponding BFRP frame.

In some configurations, the MAC addresses used in NDPA-1, NDPA-2, BFRP-1, and BFRP-2 can be identical to the corresponding MAC addresses used for single-AP sounding by the first AP and the second AP. The configuration for the second AP to sound the first AP's and second AP's STAs can be identical to the first AP, with the roles of the first AP and the second AP swapped.

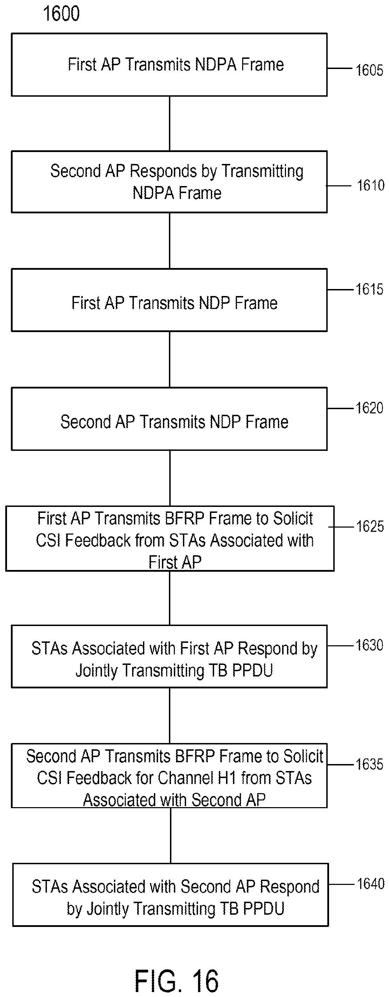

Referring now to FIG. 16 another example method 1600 of downlink channel individual-sounding with multiple access points is illustrated. Method 1600 can be implemented, using for example, systems 200 and 500 or any of the features discussed in connection with FIGS. 1-5. Method 1600 can include acts 1605-1640. At 1605, the method can include transmitting an NDPA frame (e.g., NDPA-1 frame) by the first AP. At 1610, the method can include transmitting an NDPA frame (e.g., NDPA-2 frame) by the second AP in response to the NDPA frame from the first AP. At 1615, the method can include transmitting an NDP frame (e.g., NDP-1 frame) by the first AP. At 1620, the method can include transmitting an NDP frame (e.g., NDP-2 frame) by the second AP. At 1625, the method can include transmitting a BFRP frame (e.g., BFRP-1 frame) by the first AP. At 1630, the method can include jointly transmitting a TB PPDU by STAs of the first AP in response to BFRP-1. At 1635, the method can include transmitting a BFRP frame (e.g., BFRP-2 frame) by the second AP. At 1640, the method can include jointly transmitting a TB PPDU by STAs of the second AP in response to the BFRP frame (e.g., BFRP-2 frame).

At 1605, the method can include transmitting an NDPA frame by the first AP. For instance, the first AP can transmit an NDPA-1 frame that can function as a trigger for the second AP, for example, using a predetermined AID value within a STA-information field. The NDPA-1 frame can include STA-information fields addressed to one or more of the STAs associated with the first AP. The STA-information fields can identify the type of feedback solicited from each STA, for example, indicating that CSI feedback from both APs (H1 and H2) is solicited. The frame can also indicate the specific multi-AP sounding sequence being used. The format of the NDPA-1 frame can be a non-HT PPDU.

At 1610, the method can include transmitting an NDPA frame in response. For instance, the second AP can transmit an NDPA-2 frame in response to NDPA-1. The NDPA-2 frame can include the STA-information fields addressed to each of the STAs associated with the second AP. The STA-information fields can identify the type of feedback solicited from each STA, for example, indicating that CSI from both APs is solicited. The NDPA-2 frame can indicate the specific multi-AP sounding sequence being used to distinguish the sequence from single AP and/or other multi-AP sounding sequences. The format of the NDPA-2 frame can be a non-HT PPDU.

At 1615, the method can include transmitting an NDP frame by the first AP. For instance, the first AP can transmit an NDP-1 frame that includes the same number of LTFs as a regular single-AP NDP transmitted by the first AP within its associated BSS. The STAs that are addressed by and receive NDPA-1 or NDPA-2 can measure the DL channel H1 from the first AP using the information in the NDP-1 frame.

At 1620, the method can include transmitting an NDP frame by the second AP. For instance, the second AP can transmit an NDP-2 frame that includes the same number of LTFs as a regular single-AP NDP transmitted by the second AP within its associated BSS. The STAs that are addressed by and receive NDPA-1 or NDPA-2 can measure the DL channel H2 from the second AP using the information in NDP-2.

At 1625, the method can include transmitting a BFRP frame by the first AP. For instance, the first AP can transmit a BFRP-1 frame that solicits individual CSI reports corresponding to DL channels H1 and H2 from the STAs associated with the first AP. The format of the BFRP-1 can be a non-HT PPDU. The transmission parameters specified per STA in the BFRP frame, such as MCS, spatial-stream allocation, and RU allocation, can be configured such that the first AP and the second AP can correctly decode the response transmitted by that STA based on the transmission parameters.

At 1630, the method can include jointly transmitting a TB PPDU by STAs of the first AP. For instance, the associated STAs of the first AP that are addressed by and receive BFRP-1 can jointly transmit a TB PPDU in response. Each STA can feed back two CSI reports, such as CBR: one report based on the first AP's channel H1 and the other report based on the second AP's channel H2. The CSI reports can be transmitted according to the transmission parameters specified for the STA in the BFRP frame.

At 1635, the method can include transmitting a BFRP frame by the second AP. For instance, the second AP can transmit a BFRP-2 frame that solicits individual CSI reports corresponding to DL channels H1 and H2 from the STAs associated with the second AP. The format of the BFRP-2 can be a non-HT PPDU. The transmission parameters specified per STA in the BFRP frame, such as MCS, spatial-stream allocation, and RU allocation, can be configured such that both the first AP and the second AP can correctly decode the response transmitted by that STA based on the transmission parameters.

At 1640, the method can include jointly transmitting a TB PPDU by STAs of the second AP. For instance, the STA of the second AP that are addressed by and receive BFRP frame (e.g., BFRP-2 frame) can jointly transmit a TB PPDU in response. Each STA can feed back two CSI reports, such as CBR: one report based on the first AP's channel H1 and the other report based on the second AP's channel H2. The CSI reports can be transmitted according to the transmission parameters specified for the STA in the BFRP frame.

In some configurations, the MAC addresses and AIDs used in NDPA-1 and BFRP-1 can be identical to the corresponding MAC addresses and AIDs used for single-AP sounding by the first AP. In some configurations, the MAC addresses and AIDs used in NDPA-2 and BFRP-2 can be identical to the corresponding MAC addresses and AIDs used for single-AP sounding by the second AP.

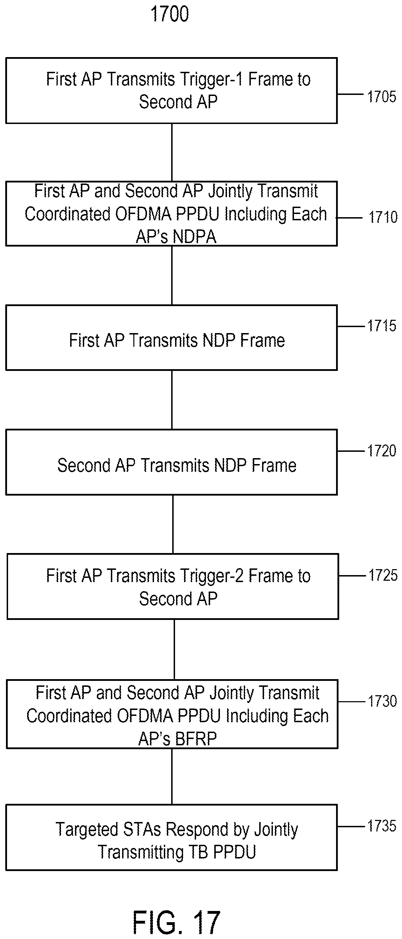

Referring now to FIG. 17 another example method 1700 of downlink channel individual-sounding with multiple access points is illustrated. Method 1700 can be implemented, using for example, systems 200 and 500 or any of the features discussed in connection with FIGS. 1-5. Method 1700 can include acts 1705-1730. At 1705, the method can include transmitting a trigger frame (e.g., trigger-1 frame) by the first AP. At 1710, the method can include jointly transmitting a coordinated-OFDMA PPDU, including each AP's NDPA, by the first AP and the second AP. At 1715, the method can include transmitting an NDP frame (e.g., NDP-1 frame) by the first AP. At 1720, the method can include transmitting an NDP frame (e.g., NDP-2 frame) by the second AP. At 1725, the method can include transmitting a trigger frame (e.g., a trigger-2 frame) from the first AP to the second AP. At 1730, the method can include jointly transmitting a coordinated-OFDMA PPDU, including each AP's BFRP, by the first AP and the second AP. At 1735, the method can include jointly transmitting a TB PPDU by STAs addressed by the BFRP frame (e.g., the BFRP-1 frame, or the BFRP-2 frame).

At 1705, the method can include transmitting a trigger frame by the first AP. For instance, the first AP can transmit a trigger-1 frame that indicates parameters for constructing a coordinated-OFDMA frame for transmitting NDPA information. The parameters can include aspects, such as RU allocation for each AP, symbol duration, guard interval, and total duration, among others. The parameters can be similar to the parameters used in a trigger frame for requesting a TB PPDU. The second AP can use the information in the trigger-1 frame to estimate the CFO and SFO relative to the first AP. The format of the trigger-1 frame can be a non-HT PPDU. The trigger-1 frame can include parameters for constructing a coordinated-OFDMA frame for the BFRP frame, which can include information on allowed RUs for each STA associated with the corresponding APs to transmit the TB PPDU in response to the BFRP frame.

At 1710, the method can include jointly transmitting a coordinated-OFDMA PPDU, including each AP's NDPA. For instance, the first AP and the second AP can jointly transmit a coordinated-OFDMA PPDU including the NDPA frame associated with each AP. Before transmission, the second AP can pre-correct CFO and SFO relative to the first AP to avoid signal cancellation. The second AP can apply a cyclic shift to its transmitted signal relative to the first AP, especially for the preamble. Based on the parameters specified in the trigger-1 frame, the first AP and the second AP can respectively transmit NDPA-1 and NDPA-2 on their allocated RUs. Each NDPA frame can be broadcast to the corresponding AP's STAs, and can include STA-information fields that use their AIDs to specify or identify the type of feedback expected from each STA. NDPA-1 and NDPA-2 can indicate the specific multi-AP sounding sequence being used to distinguish the sequence from single-AP and other multi-AP sounding sequences.

At 1715, the method can include transmitting an NDP frame by the first AP. For instance, the first AP can transmit an NDP-1 frame, which can include the same number of LTFs as a regular single-AP NDP transmitted by the first AP within its associated BSS. The STAs that are addressed by and receive NDPA-1 or NDPA-2 can measure the DL channel H1 from the first AP using the information in the NDP-1 frame.

At 1720, the method can include transmitting an NDP frame by the second AP. For instance, the second AP can transmit an NDP-2 frame, which can include the same number of LTFs as a regular single-AP NDP transmitted by the second AP within its associated BSS. The STAs that are addressed by and receive NDPA-1 or NDPA-2 can measure the DL channel H2 from the second AP using the NDP-2 frame.

At 1725, the first AP can optionally transmit a trigger-2 frame to the second AP. Similar to the trigger-1 frame, the trigger-2 frame can indicate parameters for constructing a coordinated-OFDMA frame for BFRP, as well as the allowed RUs for each AP's STAs to transmit the TB PPDU in response to BFRP. The format of the trigger-2 frame can be a non-HT PPDU. If transmitted, the second AP can refine or re-estimate CFO and SFO relative to the first AP.

At 1730, the method can include jointly transmitting a coordinated-OFDMA PPDU, including each AP's BFRP. For instance, the first AP and the second AP can jointly transmit a coordinated-OFDMA PPDU including BFRP-1 frame from the first AP and BFRP-2 frame from the second AP. The second AP can pre-correct the corresponding CFO and SFO relative to the first AP before transmission. The second AP can apply a cyclic shift to its transmitted signal relative to the first AP to avoid signal cancellation (for the preamble). Based on the parameters specified in the preceding trigger frame (trigger-2 if present, else trigger-1), the first AP and the second AP can respectively transmit BFRP-1 and BFRP-2 on their allocated RUs, addressed to their corresponding STAs. BFRP-1 and BFRP-2 can respectively solicit the first AP's STAs and the second AP's STAs for two individual CSI reports corresponding to DL channels H1 and H2. The transmission parameters specified per STA in the BFRP frames (e.g., MCS, spatial-stream allocation, RU allocation, etc.) can be configured such that the response transmitted by each STA based on the transmission parameters can be decoded correctly by the first AP and the second AP.

At 1735, the method can include jointly transmitting a TB PPDU by STAs. For instance, the STAs that are addressed by and receive BFRP frames (e.g., the BFRP-1 frame, or the BFRP-2 frame) can jointly transmit a TB PPDU in response. Each STA can feed back two CSI reports, such as CBR: one based on the first AP's channel and the other report based on the second AP's channel. The CSI reports can be transmitted according to the transmission parameters specified for the STA in the BFRP frames.

In some configurations, the MAC addresses and AIDs used in NDPA-1 and BFRP-1 can be identical to the corresponding MAC addresses and AIDs used for single-AP sounding by the first AP. In some configurations, the MAC addresses and AIDs used in NDPA-2 and BFRP-2 can be identical to the corresponding MAC addresses and AIDs used for single-AP sounding by the second AP.

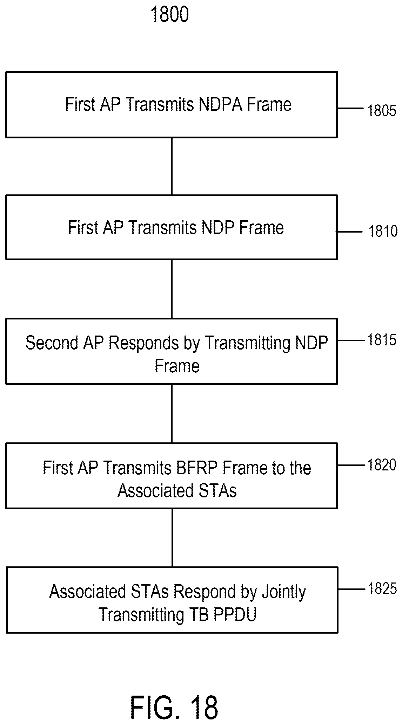

Referring now to FIG. 18 another example method 1800 of downlink channel individual-sounding with multiple access points is illustrated. Method 1800 can be implemented, using for example, systems 200 and 500 or any of the features discussed in connection with FIGS. 1-5. Method 1800 can include acts 1805-1825. At 1805, the method can include transmitting an NDPA frame by the first AP to the STAs within its associated BSS. At 1810, the method can include transmitting an NDP frame (e.g., NDP-1 frame) by the first AP. At 1815, the method can include transmitting an NDP frame (e.g., NDP-2 frame) by the second AP. At 1820, the method can include transmitting a BFRP frame by the first AP to its associated STAs. At 1825, the method can include jointly transmitting a TB PPDU by the STAs of the first AP receiving the BFRP frame.

At 1805, the method can include transmitting an NDPA frame by the first AP to the STAs. For instance, the first AP can transmit an NDPA frame to the STAs within its BSS. The NDPA frame can function as a trigger for the second AP, for example, using a predetermined AID value within a STA-information field. The NDPA frame can include the STA-information fields addressed to one or more of the STAs associated with the first AP. The STA-information fields can identify the type of feedback solicited from each STA, for example, indicating that CSI from both APs is solicited. The format of the NDPA frame can be a non-HT PPDU. The NDPA frame can indicate the multi-AP sounding sequence being used to distinguish the sequence from single AP and other multi-AP sounding sequences.

At 1810, the method can include transmitting an NDP frame by the first AP. For instance, the first AP can transmit an NDP-1 frame, which can include the same number of LTFs as a regular single-AP NDP transmitted by the first AP within its associated BSS. The preamble of NDP-1 frame can signal the BSS color corresponding to the BSS associated with the first AP. The STAs associated with the first AP, addressed by the NDPA frame, can measure the DL channel H1 from the first AP using the NDP-1 frame.

At 1815, the method can include transmitting an NDP frame by the second AP. For instance, the second AP can transmit an NDP-2 frame, which can include the same number of LTFs as a regular single-AP NDP transmitted by the second AP within its associated BSS. The preamble of the NDP-2 frame can signal the BSS color corresponding to the BSS associated with the second AP. The STAs associated with the first AP, addressed by the NDPA frame, can use the NDP-2 frame to measure the DL channel H2 from the second AP.

At 1820, the method can include transmitting a BFRP frame by the first AP to the associated STAs. For instance, the first AP can transmit a BFRP frame to STAs within its BSS (which can be addressed in the NDPA frame) to solicit two individual CSI reports corresponding to DL channels H1 and H2 from the targeted STAs. The format of the BFRP frame can be a non-HT PPDU. The transmission parameters specified per STA in the BFRP frame, such as MCS, spatial-stream allocation, and RU allocation, can be configured such that the response transmitted by that STA based on the transmission parameters can be decoded correctly by the first AP and the second AP.

At 1825, the method can include jointly transmitting a TB PPDU by the STAs of the first AP. For instance, the first AP's STAs that are addressed by and receive the BFRP frame can jointly transmit a TB PPDU in response. Each STA can feed back two CSI reports, such as CBR: one based on the first AP's channel H1 and the other based on the second AP's channel H2. The CSI reports can be transmitted according to the transmission parameters specified for the STA in the BFRP frames. The CSI feedback can be directly received at the first AP (over the air). The CSI feedback may be received directly (over the air) by the second AP. The CSI feedback may be received first by the first AP and then forwarded to the second AP. In some configurations, the MAC addresses and AIDs used in NDPA and BFRP can be identical to the corresponding MAC addresses and AIDs used for single-AP sounding by the first AP.

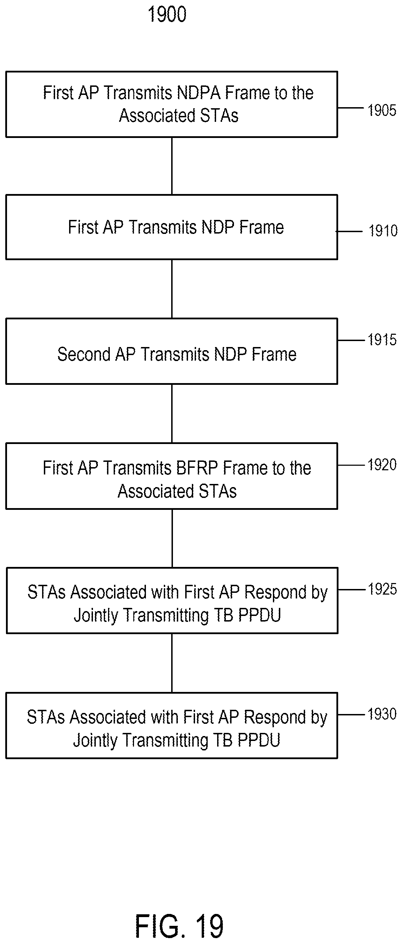

Referring now to FIG. 19 another example method 1900 of downlink channel individual-sounding with multiple access points is illustrated. Method 1900 can be implemented, using for example, systems 200 and 500 or any of the features discussed in connection with FIGS. 1-5. Method 1900 can include acts 1905-1930. At 1905, the method can include transmitting an NDPA frame from the first AP to its STAs within BSS. At 1910, the method can include transmitting an NDP frame (e.g., NDP-1 frame) from the first AP. At 1915, the method can include transmitting an NDP frame (e.g., NDP-2 frame) from the second AP. At 1920, the method can include transmitting a BFRP frame from the first AP to the associated STAs. At 1925, the method can include jointly transmitting TB PPDU (e.g., TB PPDU-1) by STAs associated with the first AP addressed by the BFRP frame. At 1930, the method can include jointly transmitting TB PPDU (e.g., TB PPDU-2) by STAs associated with the first AP addressed by the BFRP frame.

At 1905, the method can include transmitting an NDPA frame by the first AP. For instance, the first AP can transmit an NDPA frame to associated STAs within its BSS. The NDPA frame can function as a trigger for the second AP, for example, using a predetermined AID value within a STA-information field. The NDPA frame can include the STA-information fields addressed to STAs associated with the first AP. The STA-information fields can identify the type of feedback solicited from each STA. For example, a STA-information field addressed to a first STA could indicate that CSI from both APs is solicited from the first STA. For example, a STA-information field addressed to a second STA could indicate that CSI from only the first AP is solicited from the second STA. For example, a STA-information field addressed to a third STA could indicate that CSI from only the second AP is solicited from the third STA. The format of the NDPA frame can be a non-HT PPDU. The NDPA frame can indicate the multi-AP sounding sequence being used to distinguish the sequence from single AP and other multi-AP sounding sequences.

At 1910, the method can include transmitting the NDP frame by the first AP. For instance, the first AP can transmit the NDP-1 frame, which can include the same number of LTFs as a regular single-AP NDP transmitted by the first AP within its associated BSS. The preamble of the NDP-1 frame can signal the BSS color corresponding to the BSS associated with the first AP. The STAs associated with the first AP, addressed by the NDPA frame, can use NDP-1 to measure the DL channel H1 from the first AP.

At 1915, the method can include transmitting the NDP frame by the second AP. For instance, the second AP can transmit the NDP-2 frame, which can include the same number of LTFs as a regular single-AP NDP transmitted by the second AP within its associated BSS. The preamble of NDP-2 can signal the BSS color corresponding to the BSS associated with the second AP. The STAs associated with the first AP, addressed by the NDPA frame, can use the NDP-2 frame to measure the DL channel H2 from the second AP.

At 1920, the method can include transmitting a BFRP frame by the first AP to the associated STAs. For instance, the first AP can transmit a BFRP frame to the STAs within its BSS (which can be addressed in the NDPA), soliciting individual CSI reports corresponding to DL channels H1 and H2 from the targeted STAs. The format of the BFRP frame can be a non-HT PPDU. The BFRP frame can solicit feedback via two TB PPDU transmissions. The BFRP frame can specify or identify two separate sets of transmission parameters (e.g., per-STA MCS, spatial-stream allocation, RU allocation), one set for each TB PPDU. The set-1 parameters can be configured such that TB PPDU-1 transmitted by the STAs included in set-1 can be decoded correctly by the first AP. The set-2 parameters can be configured such that TB PPDU-2 transmitted by the STAs included in set-2 can be decoded correctly by the second AP. Any STA that is included in both set-1 and set-2 can transmit both TB PPDU-1 and TB PPDU-2

At 1925, the method can include jointly transmitting TB PPDU by STAs associated with the first AP. For instance, the STAs associated with the first AP, addressed by the BFRP frame via set-1, can jointly transmit TB PPDU-1 in response. Each STA can feed back a CSI report (e.g., compressed beamforming report (CBR)) based on the first AP's channel H1. The CSI report can be transmitted according to the transmission parameters set-1 specified for the STA in the BFRP frame.

At 1930, the method can include jointly transmitting TB PPDU by STAs associated with the first AP. For instance, the STAs associated with the first AP, addressed by the BFRP frame via set-2, can jointly transmit TB PPDU-2 in response. Each STA can feed back a CSI report (e.g., CBR) based on the second AP's channel H2. The CSI report can be transmitted according to the transmission parameters set-2 specified for the STA in the BFRP.

Explicit-sounding options, such as sounding in which CSI feedback is explicitly solicited and obtained from STAs, can be categorized into joint-sounding and individual sounding options. Examples of explicit-sounding options can include methods 600, 700, 800, 900, 1000, 1100, 1200, 1300, 1400, 1500, 1600, 1700, 1800, 1900, the individual operations of which can be mixed and matched between these examples, depending on the design. In some implementations, the explicit-sounding options may include one or more phases. During the announcement phase, one or more APs can transmit trigger(s) and/or NDPA frames that initiate the sounding process. The NDPA frames can notify STAs and other APs about the specific type of sounding sequence and the type of CSI feedback solicited in preparation for the subsequent phases. During the channel-sounding phase, one or more APs can transmit a null-data packet (NDP), which can be used by STAs to estimate the corresponding downlink channels from the AP(s) to prepare the CSI feedback. During the feedback phase, one or more APs can solicit CSI feedback from the STAs via BFRP frames, to which the STAs respond by transmitting the CSI feedback in a TB PPDU. It can be noted that the explicit-sounding options, as described by example methods 600, 700, 800, 900, 1000, 1100, 1200, 1300, 1400, 1500, 1600, 1700, 1800, and 1900, outline multiple variants for the three phases (announcement, channel-sounding, and feedback) and describe specific combinations of these variants. It is to be noted that more combinations of these variants of announcement, channel-sounding, and feedback phases are possible, which can lead to more explicit sounding options.

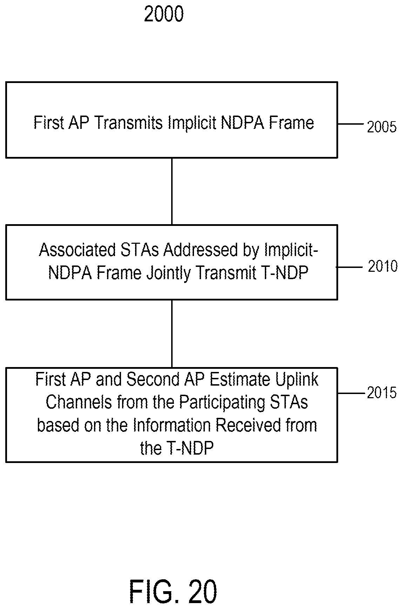

Referring now to FIG. 20 an example method 2000 of downlink channel implicit-sounding with multiple access points is illustrated. Method 2000 can be implemented, using for example, systems 200 and 500 or any of the features discussed in connection with FIGS. 1-5. Method 2000 can include acts 2005-2015. At 2005, the method can include transmitting an implicit-NDPA frame by the first AP. At 2010, the method can include jointly transmitting a T-NDP by all STAs associated with the first AP addressed by the implicit-NDPA frame. At 2015, the method can include estimating uplink channels by the first AP and the second AP from the participating STAs based on the received T-NDP.

At 2005, the method can include transmitting an implicit-NDPA frame by the first AP. For instance, the first AP can transmit the implicit-NDPA frame to solicit the uplink T-NDP frame from a first set of STAs associated with the first AP. The implicit-NDPA frame can function as a trigger for the second AP, for example, using a predetermined AID value within a STA-information field. The implicit-NDPA frame can include a field to signal to the second AP to prepare for receiving transmission of the T-NDP frame. The implicit-NDPA frame can identify transmission parameters for the T-NDP, such as bandwidth, total number of LTFs, LTF duration, guard-interval, spatial-stream position per-STA, number of spatial-streams per-STA, RU allocation per-STA, etc. Per-STA information can be provided in the STA-information fields. Each STA-information field can be addressed by an AID for each STA. The STAs associated with the first AP can estimate the CFO and SFO relative to the first AP based on the received implicit-NDPA frame. The format of the implicit-NDPA frame can be a non-HT PPDU.

At 2010, the method can include jointly transmitting a T-NDP by all STAs associated with the first AP addressed by the implicit-NDPA frame. For instance, all the STAs associated with the first AP, addressed by the implicit-NDPA frame, can jointly transmit a T-NDP according to the specified transmission parameters. The first AP and the second AP can receive the T-NDP frame transmitted by the STAs associated with the first AP (e.g., first set). Each STA can pre-compensate for its estimated CFO and SFO based on the implicit-NDPA frame.

At 2015, the method can include estimating uplink channels from the participating STAs based on the received T-NDP. For instance, the first AP and the second AP can estimate the respective uplink channels from the participating STAs based on the received T-NDP. The first AP can share its estimated uplink channels, along with any reciprocity coefficients desired for estimating or translating the uplink channels to one or more downlink channels, with the second AP, and vice versa. The first AP and the second AP can synchronize their receptions of the T-NDP frame to estimate uplink channels concurrently. In some configurations, the MAC addresses and AIDs used in the implicit-NDPA frame can be identical to the MAC addresses and AIDs used for single-AP sounding by the first AP.

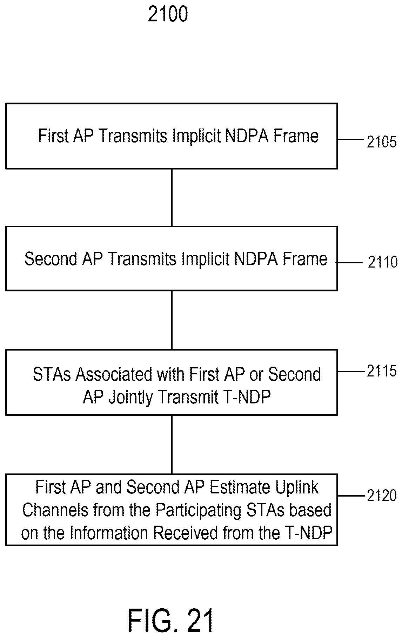

Referring now to FIG. 21 another example method 2100 of downlink channel implicit-sounding with multiple access points is illustrated. Method 2100 can be implemented, using for example, systems 200 and 500 or any of the features discussed in connection with FIGS. 1-5. Method 2100 can include acts 2105-2120. At 2105, the method can include transmitting an implicit-NDPA frame (e.g., implicit-NDPA-1 frame) by the first AP. At 2110, the method can include transmitting an implicit-NDPA frame (e.g., implicit-NDPA-2 frame) by the second AP. At 2115, the method can include jointly transmitting a T-NDP by STAs associated with the first AP or the second AP. At 2120, the method can include estimating uplink channels by the first AP and the second AP from the T-NDP received from participating STAs.

At 2105, the method can include transmitting an implicit-NDPA frame by the first AP. For instance, the first AP can transmit an implicit-NDPA-1 frame that can function as a trigger for the second AP, for example, via a STA-information field with a predetermined AID value, to transmit implicit-NDPA-2 and prepare for a T-NDP. The implicit-NDPA-1 frame can include information for the second AP on allowed transmission parameters for the second AP's STAs when transmitting a T-NDP, so that the second AP can include this information in the implicit-NDPA-2 frame. The second AP can use the information in the implicit-NDPA-1 frame to estimate its CFO and SFO relative to the first AP. The implicit-NDPA-1 frame can solicit an uplink T-NDP from the STAs associated with the first AP and can identify transmission parameters for the T-NDP, such as bandwidth, total number of LTFs, LTF duration, guard interval, spatial-stream position per STA, number of spatial streams per STA, RU allocation per STA, etc. Per-STA information can be provided in the STA-information fields. Each STA-information field can be addressed by an AID for each STA. The STAs associated with the first AP can estimate their CFO/SFO relative to the first AP based on the received implicit-NDPA-1 frame. The implicit-NDPA-1 frame can indicate the multi-AP sounding sequence being used to distinguish the sequence from single AP and other multi-AP sounding sequences. The format of the implicit-NDPA-1 frame can be a non-HT PPDU.

At 2110, the method can include transmitting an implicit-NDPA frame by the second AP. For instance, the second AP can transmit an implicit-NDPA-2 frame after pre-compensating for its estimated CFO/SFO relative to the first AP. The implicit-NDPA-2 frame can solicit an uplink T-NDP from the STAs associated with the second AP and can identify transmission parameters for the T-NDP, such as bandwidth, total number of LTFs, LTF duration, guard-interval, spatial-stream position per-STA, number of spatial-streams per-STA, RU allocation per-STA, etc. Per-STA information can be provided in the STA-information fields. Each STA-information field can be addressed by an AID for each STA. The STAs associated with the second AP can estimate their CFO/SFO relative to the second AP (which itself has pre-compensated relative to the first AP). The implicit-NDPA-2 frame can indicate the specific multi-AP sounding sequence being used to distinguish the sequence from single AP and/or other multi-AP sounding sequences. The format of the implicit-NDPA-2 frame can be a non-HT PPDU.

At 2115, the method can include jointly transmitting a T-NDP by STAs associated with the first AP or the second AP. For instance, the STAs associated with the first AP or the second AP that are addressed by the implicit-NDPA frames (from the first AP or the second AP) can jointly transmit a T-NDP frame according to the transmission parameters specified in the respective implicit-NDPA frames. Each STA can pre-compensate for its estimated CFO/SFO based on the corresponding implicit-NDPA frame the STA receives.

At 2120, the method can include estimating uplink channels by the first AP and the second AP from the T-NDP. For instance, based on the received T-NDP, the first AP and the second AP can estimate the respective uplink channels from the participating STAs. The first AP can share its estimated uplink channels (along with any reciprocity coefficients desired for translating these to downlink channels) with the second AP, and vice versa. In some configurations, the MAC addresses and AIDs used in implicit-NDPA-1 frame can be identical to the MAC addresses and AIDs used for single-AP sounding by the first AP. In some configurations, the MAC addresses and AIDs used in implicit-NDPA-2 frame can be identical to the MAC addresses and AIDs used for single-AP sounding by the second AP .

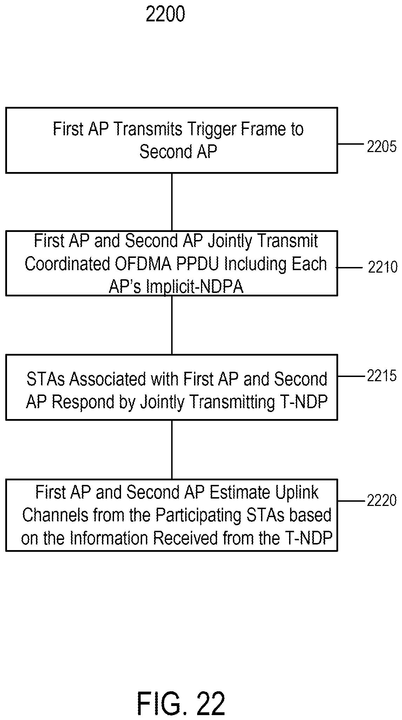

Referring now to FIG. 22 another example method 2200 of downlink channel implicit-sounding with multiple access points is illustrated. Method 2200 can be implemented, using for example, systems 200 and 500 or any of the features discussed in connection with FIGS. 1-5. Method 2200 can include acts 2205-2220. At 2205, the method can include transmitting a trigger frame (e.g., trigger-1 frame) by the first AP to the second AP. At 22110, the method can include jointly transmitting a coordinated-OFDMA PPDU, including each AP's implicit-NDPA, by the first AP and the second AP. At 2215, the method can include jointly transmitting a T-NDP by all STAs associated with the first AP and the second AP. At 2220, the method can include estimating uplink channels by the first AP and the second AP from the T-NDP received from participating STAs.

At 2205, the method can include transmitting a trigger frame. For instance, the first AP can transmit a trigger-1 frame to the second AP. The trigger-1 frame can indicate parameters for constructing a coordinated OFDMA frame used for implicit sounding (implicit-NDPA). The trigger-1 frame can specify parameters, including, but not limited to, the RU allocated for each AP, symbol duration, guard interval, total duration, etc., similar to trigger frames used to request TB-PPDU transmissions. The trigger-1 frame can be used by the second AP to estimate its CFO and SFO relative to the first AP. The format of the trigger-1 frame can be a non-HT PPDU. The trigger-1 frame can include information on allowed transmission parameters for the second AP's STAs when responding with a T-NDP to the implicit-NDPA.

At 2210, the method can include jointly transmitting a coordinated-OFDMA PPDU, including each AP's implicit-NDPA. For instance, the first AP and the second AP can jointly transmit a coordinated-OFDMA PPDU including each AP's implicit-NDPA frame. Before transmission, the second AP can pre-correct its CFO and SFO relative to the first AP. In some configurations, the second AP can optionally apply a cyclic shift to its transmitted signal relative to the first AP to avoid signal cancellation for the preamble. Within the coordinated-OFDMA PPDU, the first AP and the second AP can transmit their respective implicit-NDPA frames (implicit-NDPA-1 and implicit-NDPA-2) on the allocated RUs, according to the parameters specified in the trigger-1 frame. Each implicit-NDPA can solicit an uplink T-NDP from the corresponding STAs associated with the AP. Each implicit-NDPA can identify transmission parameters for the T-NDP, such as bandwidth, total number of LTFs, LTF duration, guard-interval, spatial-stream position per-STA, number of spatial-streams per-STA, RU allocation per-STA, etc. Per-STA information can be provided in the STA-information fields. Each STA-information field can be addressed by an AID for each STA. The implicit-NDPA frames can indicate the specific multi-AP sounding sequence being used to distinguish the sequence from single AP and/or other multi-AP sounding sequences. Based on the received coordinated-OFDMA PPDU, the STAs associated with the first AP and the second AP can estimate the respective CFO/SFO. In some configurations, the MAC addresses and AIDs used in each AP's implicit-NDPA frame can be identical to the MAC addresses and AIDs used for single-AP sounding by the corresponding AP.

At 2215, the method can include jointly transmitting a T-NDP by all STAs. For instance, all the STAs associated with the first AP and the second AP, addressed by the implicit-NDPA frames (from the first AP or the second AP), can jointly transmit a T-NDP frame according to the transmission parameters specified in the respective implicit-NDPA frames. Each STA can pre-compensate for its estimated CFO/SFO based on the received coordinated-OFDMA PPDU.

At 2220, the method can include estimating uplink channels by the first AP and the second AP from the T-NDP. For instance, based on the received T-NDP, the first AP and the second AP can estimate the respective uplink channels from the participating STAs. The first AP can share its estimated uplink channels, along with any reciprocity coefficients used for translating these to downlink channels, with the second AP, and vice versa.

It should be noted that certain passages of this disclosure may reference terms such as "first" and "second" in connection with devices, modes of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. That alternate embodiments may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc., functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively, as set forth in the United States Patent Office Manual of Patent Examining Procedures, Section 2111.03.

## Claims

1. A system comprising:
a first access point (AP) configured to transmit a null-data packet announcement (NDPA) frame to trigger a sounding process for a first set of one or more stations of the first AP, wherein the NDPA is configured to trigger a second AP to transmit sounding information;
wherein both the first AP and the second AP are configured to transmit sounding information to the first set of one or more stations of the first AP, each station of the first set of one or more stations of the first AP to measure the downlink (DL) channel from each of the first AP and the second AP based on the sounding information to form a composite channel;
wherein the sounding information comprises one of a joint-null-data packet (NDP) frame or sequential NDP frames;
wherein the first AP is configured to transmit a beamforming report poll (BFRP) frame for the composite channel; and
wherein the first AP is configured to receive, from the each station of the first set of the one or more stations receiving the BFRP frame, a trigger-based physical layer protocol data unit (PPDU) to provide channel-state information (CSI) based on the respective composite channel of the each station of the first set of the one or more stations.

2. The system of claim 1, wherein the first AP is configured to transmit a second NDPA frame to trigger a second sounding process for the first set of one or more stations of the first AP and to transmit a second BFRP frame responsive to the second sounding process, wherein the second NDPA frame does not trigger the second AP to transmit sounding information, wherein the NDPA frame and the second NDPA frame are configured to include identical values for one or more medium access control (MAC) addresses and for one or more association identifiers (AIDs) corresponding to one or more stations of the first set of one or more stations of the first AP, and wherein the BFRP frame and the second BFRP frame are configured to include identical values for one or more MAC addresses and one or more AIDs corresponding to one or more stations of the first set of one or more stations of the first AP.

3. The system of claim 1 or 2, wherein the NDPA comprises information indicative of at least one of: a type of the sounding process, a type of a channel state information (CSI) requested or information on beamforming configuration, timing or duration.

4. The system of any preceding claim, wherein the BFRP frame includes transmission parameters corresponding to one or more stations of the first set of one or more stations, wherein the transmission parameters are configured to allow the second AP to decode a channel state information (CSI) from the trigger-based PPDU, the data indicative of at least one of: a modulation and coding scheme, a spatial stream allocation or a resource unit of the one or more stations and wherein each station of the first set of one or more stations transmits a trigger-based PPDU with the CSI according to the transmission parameters and the second AP is configured to receive the trigger-based PPDU from the first set of one or more stations to decode the CSI.

5. The system of any preceding claim, wherein the trigger-based PPDU transmitted by each station provides the CSI including at least one of: beamforming report addressed to the first AP using a medium access control (MAC) address of the first AP, a beamforming matrix index, a signal-to-noise ratio, or a metric of a performance of a modulation scheme.

6. The system of any preceding claim, wherein the NDPA frame includes a station information field with an association identifier (AID) value and wherein the second AP is configured to transmit sounding information responsive to the AID value.

7. The system of any preceding claim, wherein the second AP synchronizes with the first AP, based on the NDPA and at least one of: a timing and parameters of the sounding process, a carrier-frequency offset (CFO) or a sampling-frequency offset (SFO) of the second AP with respect to the first AP.

8. A system comprising:
a second AP configured to transmit a null-data packet announcement (NDPA) frame to a second set of one or more stations within a basic service set (BSS) of the second AP, the NDPA comprising a field to trigger a first AP to transmit a null-data packet (NDP) frame;
wherein the first AP is configured to transmit the NDP frame to trigger a sounding process to the second set of one or more stations of the second AP, the second set of one or more stations receiving the NDP frame to measure a downlink (DL) channel with respect to the first AP; and
wherein the second AP is configured to transmit one or more beamforming report poll (BFRP) frames to trigger feedback comprising channel-state information (CSI) from the second set of one or more stations, based on a measurement of the DL channel with respect to the first AP.

9. The system of claim 8, wherein the field of the NDPA frame comprises an association identifier (AID) having a predetermined value to trigger the first AP to prepare for transmission of the NDP frame.

10. The system of claim 8 or 9, wherein the NDPA frame transmitted by the second AP is configured to indicate to the second set of one or more stations the type of CSI to feedback, wherein the one or more BFRP frames are configured to specify for each station of the second set of one or more stations transmission parameters to transmit a trigger-based physical layer protocol data unit (TB-PPDU) comprising the CSI.

11. The system of any preceding claim 8 to 10, wherein the NDP frame transmitted by the first AP indicates a BSS color in a preamble corresponding to the BSS of the second AP.

12. The system of any preceding claim 8 to 11, wherein the second AP is configured to receive from each station of the second set of one or more stations receiving the one or more BFRP frames a trigger-based physical layer protocol data unit (PPDU) to provide channel-state information (CSI) based on the downlink channel and wherein the second set of one or more stations of the second AP transmit, in response to the one or more BFRP frames including one or more parameters, the trigger-based PPDU comprising a compressed beamforming report (CBR) including one or more measurements of the downlink channel, wherein the trigger-based PPDU is transmitted according to the transmission parameters specified in the BFRP.

13. The system of any preceding claim 8 to 12, wherein the NDPA frame and the one or more BFRP frames each include a first medium access control (MAC) address and a first association identifier (AID) to address one or more stations of the second set of one or more stations and wherein the second AP is configured to include the first MAC address and the first AID in each of a second NDPA frame and a second BFRP frame to address the one or more stations of the second set of one or more stations;
wherein the second NDPA frame does not trigger the first AP to transmit a second NDP frame.

14. The system of any preceding claim 8 to 13, wherein transmission parameters specified in the BFRP for the TB PPDU are configured for the first AP to decode transmissions from the second set of one or more stations; and wherein the first AP is configured to receive a trigger-based physical layer protocol data unit (PPDU) from each station of the second set of one or more stations according to the transmission parameters specified in the BFRP.

15. A system comprising:
a first access point (AP) configured to transmit an implicit null-data packet announcement (implicit-NDPA) frame to solicit an uplink triggered NDP (T-NDP) frame from a first set of one or more stations of the first AP, the implicit-NDPA frame comprising a field to indicate to a second AP to prepare for receiving transmission of the T-NDP frame, the implicit-NDPA frame identifying one or more parameters for the transmission of the T-NDP frame;
wherein the first AP and the second AP are configured to receive the T-NDP frame from the first set of one or more stations of the first AP; and
wherein the first AP and the second AP are configured to estimate respective uplink channels based at least on the T-NDP frame.
